(19) **Europäisches Patentamt / European Patent Office / Office européen des brevets**

(11) **EP 4 510 471 A1**

(12) **EUROPEAN PATENT APPLICATION**
published in accordance with Art. 153(4) EPC

(43) Date of publication:
**19.02.2025 Bulletin 2025/08**

(21) Application number: **23802485.5**

(22) Date of filing: **14.03.2023**

(51) International Patent Classification (IPC):
**H04B 10/54** (2013.01)     **H04B 10/61** (2013.01)

(52) Cooperative Patent Classification (CPC):
**H04B 10/54; H04B 10/61; H04J 3/06; H04L 5/00**

(86) International application number:
**PCT/CN2023/081300**

(87) International publication number:
**WO 2023/216709 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.05.2022   CN 202210504319**

(71) Applicant: **Huawei Technologies Co., Ltd.**
**Shenzhen, Guangdong 518129 (CN)**

(72) Inventors:
- **HUANG, Kechao**
  **Shenzhen, Guangdong 518129 (CN)**
- **MA, Huixiao**
  **Shenzhen, Guangdong 518129 (CN)**
- **YANG, Xiaoling**
  **Shenzhen, Guangdong 518129 (CN)**
- **HUANG, Qinhui**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **TRANSMISSION METHOD FOR OPTICAL COMMUNICATION AND CORRESPONDING DEVICE**

(57)    This application discloses a transmission method for optical communication. The method is applicable to a plurality of scenarios of over 400 Gbps (including 600 Gbps, 800 Gbps, and the like), such as a metropolitan area network, a backbone network, and data center interconnection. The method includes: generating a frame including a plurality of symbols, where in a polarization direction, the frame includes $N_{FAW}$ frame alignment word symbols, $N_{PS}$ pilot symbols, and $N_{RES}$ reserved symbols, one symbol in every M symbols in the frame is a pilot symbol, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number; and transmitting the frame. In this application, because the generated frame is not further divided into subframes, and therefore has a simple structure, and a transmission delay is low. In addition, the frame alignment word symbols, the pilot symbols, and the reserved symbols help a receiving device better restore signal quality.

FIG. 6A

**Description**

This application claims priority to Chinese Patent Application No. 202210504319.2, filed with the China National Intellectual Property Administration on May 10, 2022 and entitled "TRANSMISSION METHOD FOR OPTICAL COMMUNICATION AND CORRESPONDING DEVICE", which is incorporated herein by reference in its entirety.

**TECHNICAL FIELD**

This application relates to the field of communication technologies, and specifically, to a transmission method for optical communication and a corresponding device.

**BACKGROUND**

Driven by continuous development of 5G, cloud computing, big data, artificial intelligence, and other technologies, high-speed optical transport networks are developing toward high capacity, packet-based, and intelligence. A coherent optical communication system uses amplitudes, phases, polarization, and frequencies of light waves to carry information. To resist optical signal distortion caused by dispersion, polarization-dependent impairment, noise, a nonlinear effect, and other factors during transmission and maintain long-distance transmission, the coherent optical communication system typically introduces some designed fixed symbol sequences to a transmission symbol sequence, for a receiving device to restore transmitted symbols.

An existing transmission symbol sequence is mainly applied to a 400 Gbps scenario, and cannot adapt to future scenarios of over 400 Gbps (including 600 Gbps, 800 Gbps, and the like). In addition, there are problems of a high delay and high complexity, or quality of a signal restored by a receiving device is poor, which are to be urgently resolved in future.

**SUMMARY**

This application provides a transmission method for optical communication, to resolve problems that the existing solution cannot be applied to a scenario of over 400 Gbps and has a high delay and high complexity, or quality of a signal restored by a receiving device is poor. This application further provides a corresponding device, a system, a computer-readable storage medium, a computer program product, and the like.

A first aspect of this application provides a transmission method for optical communication. The method includes: generating a frame including a plurality of symbols, where in a polarization direction of two polarization directions, the frame includes $N_{FAW}$ frame alignment word symbols, $N_{PS}$ pilot symbols, and $N_{RES}$ reserved symbols, the two polarization directions are orthogonal to each other, one symbol in every M symbols in the frame is a pilot symbol in the polarization direction, M is an integer greater than 1, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number; and transmitting the frame.

In the first aspect, the frame generated by a transmitting device is not further divided into subframes, and therefore has a simple structure, and a transmission delay is low. In addition, the $N_{FAW}$ frame alignment word symbols, the $N_{PS}$ pilot symbols, and the $N_{RES}$ reserved symbols help a receiving device better restore signal quality. Therefore, it can be learned that the frame structure in the transmission method provided in the first aspect has a simple structure and a low transmission delay, and can further improve quality of a signal restored by the receiving device.

In a possible implementation of the first aspect, in the polarization direction, there is one symbol serving as both a frame alignment word symbol and a pilot symbol in the frame, $N_{FAW} + N_{RES} = M$, and $N_{FAW} + N_{PS}$ is an odd number.

In this possible implementation, one symbol may serve as both a pilot symbol and a frame alignment word symbol. In other words, in the frame alignment word symbol, there is a symbol serving as a pilot. The frame structure can help the receiving device quickly restore a signal.

In a possible implementation of the first aspect, the pilot symbols are generated by using a target polynomial and a seed, and a combination of $(N_{FAW} + N_{PS} - 1)$ symbols of the $N_{PS}$ pilot symbols and the $N_{FAW}$ frame alignment word symbols achieves direct current balance.

In this possible implementation, the $(N_{FAW} + N_{PS} - 1)$ symbols achieve direct current balance. To be specific, in each polarization direction, a sum of real parts of complex numbers corresponding to frame alignment word symbols and pilot symbols in one frame is 0, and a sum of imaginary parts is also 0. Such a frame helps the receiving device better restore a signal.

In a possible implementation of the first aspect, in the polarization direction, there is no symbol serving as both a frame alignment word symbol and a pilot symbol in the frame, $N_{FAW} + N_{RES} + 1 = M$, and $N_{FAW} + N_{PS}$ is an even number.

In this possible implementation, in a polarization direction, there is no symbol serving as both a frame alignment word symbol and a pilot symbol in the frame. In other words, a symbol serving as a pilot is independent of a frame alignment word symbol. In this way, accuracy of signal restoration of the receiving device can be improved.

In a possible implementation of the first aspect, the pilot symbols are generated by using a target polynomial and a seed, and a combination of ($N_{FAW}$ + $N_{PS}$) symbols of the $N_{PS}$ pilot symbols and the $N_{FAW}$ frame alignment word symbols achieves direct current balance.

In this possible implementation, the ($N_{FAW}$ + $N_{PS}$) symbols achieve direct current balance, and such a frame helps the receiving device better restore a signal.

In a possible implementation of the first aspect, the $N_{FAW}$ frame alignment word symbols achieve direct current balance, and $N_{FAW}$ is an even number.

In this possible implementation, when $N_{FAW}$ is an even number, an effect of direct current balance can be enhanced.

In a possible implementation of the first aspect, the $N_{PS}$ pilot symbols achieve direct current balance, and $N_{PS}$ is an even number.

In this possible implementation, when $N_{PS}$ is an even number, an effect of direct current balance can be enhanced.

In a possible implementation of the first aspect, a value of $N_{FAW}$ is 22 or 11.

In a possible implementation of the first aspect, the plurality of symbols in the frame are in a 16QAM modulation format, and a value of A is $\pm 1$, $\pm 3$, or $\pm\sqrt{5}$.

In a possible implementation of the first aspect, a value of M is 64.

In a possible implementation of the first aspect, the target polynomial is one polynomial in the following table:

| Index | Target polynomial |
|---|---|
| 1 | $x^{10} + x^9 + x^8 + x^6 + x^5 + x^4 + x^3 + x^2 + 1$ |
| 2 | $x^{10} + x^8 + x^7 + x^6 + x^5 + x^4 + x^2 + x^1 + 1$ |
| 3 | $x^{10} + x^9 + x^8 + x^5 + 1$ |
| 4 | $x^{10} + x^9 + x^5 + x^2 + 1$ |
| 5 | $x^{10} + x^9 + x^8 + x^4 + x^3 + x^2 + 1$ |
| 6 | $x^{10} + x^9 + x^8 + x^6 + x^5 + x^4 + x^3 + x^2 + 1$ |
| 7 | $x^{10} + x^9 + x^4 + x^1 + 1$ |
| 8 | $x^{10} + x^9 + x^8 + x^7 + x^4 + x^1 + 1$ |
| 9 | $x^{10} + x^9 + x^8 + x^7 + x^6 + x^5 + x^4 + x^1 + 1$ |
| 10 | $x^{10} + x^8 + x^7 + x^3 + x^2 + x^1 + 1$ |
| 11 | $x^{10} + x^9 + x^6 + x^3 + x^2 + x^1 + 1$ |
| 12 | $x^{10} + x^9 + x^6 + x^5 + x^4 + x^3 + x^2 + x^1 + 1$ |
| 13 | $x^{10} + x^9 + x^6 + x^5 + x^4 + x^3 + x^2 + x^1 + 1$ |
| 14 | $x^{10} + x^7 + x^3 + x + 1$ |
| 15 | $x^{10} + x^9 + x^8 + x^6 + x^2 + x^1 + 1$ |
| 16 | $x^{10} + x^9 + x^8 + x^4 + x^2 + x^1 + 1$ |
| 17 | $x^{10} + x^9 + x^8 + x^7 + x^5 + x^4 + 1$ |
| 18 | $x^{10} + x^9 + x^4 + x^2 + 1$ |
| 19 | $x^{10} + x^9 + x^7 + x^6 + x^5 + x^4 + x^3 + x^2 + 1$ |
| 20 | $x^{10} + x^8 + x^6 + x^1 + 1$ |
| 21 | $x^{10} + x^8 + x^7 + x^6 + x^5 + x^4 + x^3 + x^1 + 1$ |
| 22 | $x^{10} + x^9 + x^8 + x^6 + x^2 + x^1 + 1$ |
| 23 | $x^{10} + x^9 + x^8 + x^4 + x^2 + x^1 + 1$ |
| 24 | $x^{10} + x^6 + x^5 + x^3 + x^2 + x^1 + 1$ |
| 25 | $x^{10} + x^8 + x^4 + x^3 + 1$ |

In a possible implementation of the first aspect, in a polarization direction, $N_{PS}$=97, $N_{FAW}$=22, and $N_{RES}$=42 in the frame, M=64, and a quantity $N_F$ of symbols in the frame is 6208.

In a possible implementation of the first aspect, when the target polynomial and hexadecimal seeds in the two polarization directions are one row in the following table, a normalized amplitude of a sidelobe value of a periodic autocorrelation function of pilot symbols in a same polarization direction is not greater than 0.25, and a normalized amplitude of a periodic cross-correlation function value of pilot symbols in different polarization directions is not greater than 0.25:

| Index | Target polynomial | Seed in a polarization direction 1 | Seed in a polarization direction 2 |
|---|---|---|---|
| 1 | $x^{10} + x^9 + x^8 + x^6 + x^5 + x^4 + x^3 + x^2 + 1$ | 0x255 | 0x307 |
| 2 | $x^{10} + x^8 + x^7 + x^6 + x^5 + x^4 + x^2 + x^1 + 1$ | 0x005 | 0x13B |
| 3 | $x^{10} + x^8 + x^7 + x^6 + x^5 + x^4 + x^2 + x^1 + 1$ | 0x005 | 0x277 |
| 4 | $x^{10} + x^9 + x^8 + x^5 + 1$ | 0x291 | 0x137 |
| 5 | $x^{10} + x^9 + x^5 + x^2 + 1$ | 0x0E9 | 0x303 |
| 6 | $x^{10} + x^9 + x^5 + x^2 + 1$ | 0x0E9 | 0x03B |
| 7 | $x^{10} + x^9 + x^5 + x^2 + 1$ | 0x0E9 | 0x207 |
| 8 | $x^{10} + x^9 + x^8 + x^4 + x^3 + x^2 + 1$ | 0x18D | Ox15F |
| 9 | $x^{10} + x^9 + x^8 + x^4 + x^3 + x^2 + 1$ | 0x35D | Ox15F |
| 10 | $x^{10} + x^9 + x^8 + x^6 + x^5 + x^4 + x^3 + x^2 + 1$ | 0x255 | Ox183 |
| 11 | $x^{10} + x^9 + x^4 + x^1 + 1$ | 0x0A9 | Ox143 |
| 12 | $x^{10} + x^9 + x^8 + x^7 + x^4 + x^1 + 1$ | Ox361 | 0x367 |
| 13 | $x^{10} + x^9 + x^8 + x^7 + x^4 + x^1 + 1$ | 0x361 | Ox1FF |
| 14 | $x^{10} + x^9 + x^8 + x^7 + x^4 + x^1 + 1$ | Ox361 | 0x3FF |
| 15 | $x^{10} + x^9 + x^8 + x^7 + x^4 + x^1 + 1$ | 0x339 | 0x1FF |
| 16 | $x^{10} + x^9 + x^8 + x^7 + x^4 + x^1 + 1$ | 0x339 | 0x3FF |
| 17 | $x^{10} + x^9 + x^8 + x^7 + x^4 + x^1 + 1$ | 0x205 | 0x203 |
| 18 | $x^{10} + x^9 + x^8 + x^7 + x^4 + x^1 + 1$ | 0x205 | Ox1FF |
| 19 | $x^{10} + x^9 + x^8 + x^7 + x^4 + x^1 + 1$ | 0x205 | 0x3FF |
| 20 | $x^{10} + x^9 + x^8 + x^7 + x^4 + x^1 + 1$ | 0x365 | 0x203 |
| 21 | $x^{10} + x^9 + x^8 + x^7 + x^4 + x^1 + 1$ | 0x3FD | 0x367 |
| 22 | $x^{10} + x^9 + x^8 + x^7 + x^6 + x^5 + x^4 + x^1 + 1$ | 0x091 | 0x25B |
| 23 | $x^{10} + x^9 + x^8 + x^7 + x^6 + x^5 + x^4 + x^1 + 1$ | 0x091 | 0x0B7 |
| 24 | $x^{10} + x^8 + x^7 + x^3 + x^2 + x^1 + 1$ | 0x359 | 0x083 |
| 25 | $x^{10} + x^8 + x^7 + x^3 + x^2 + x^1 + 1$ | 0x3B5 | 0x083 |
| 26 | $x^{10} + x^9 + x^6 + x^3 + x^2 + x^1 + 1$ | 0x389 | 0x103 |
| 27 | $x^{10} + x^9 + x^6 + x^3 + x^2 + x^1 + 1$ | 0x389 | Ox38B |
| 28 | $x^{10} + x^9 + x^6 + x^3 + x^2 + x^1 + 1$ | 0x389 | 0x207 |
| 29 | $x^{10} + x^9 + x^6 + x^3 + x^2 + x^1 + 1$ | 0x389 | Ox18F |
| 30 | $x^{10} + x^9 + x^6 + x^3 + x^2 + x^1 + 1$ | 0x099 | 0x103 |
| 31 | $x^{10} + x^9 + x^6 + x^3 + x^2 + x^1 + 1$ | 0x099 | Ox38B |
| 32 | $x^{10} + x^9 + x^6 + x^3 + x^2 + x^1 + 1$ | 0x099 | 0x207 |
| 33 | $x^{10} + x^9 + x^6 + x^3 + x^2 + x^1 + 1$ | 0x099 | Ox18F |
| 34 | $x^{10} + x^9 + x^6 + x^3 + x^2 + x^1 + 1$ | Ox199 | 0x103 |

(continued)

| Index | Target polynomial | Seed in a polarization direction 1 | Seed in a polarization direction 2 |
|---|---|---|---|
| 35 | $x^{10} + x^9 + x^6 + x^3 + x^2 + x^1 + 1$ | Ox199 | Ox38B |
| 36 | $x^{10} + x^9 + x^6 + x^3 + x^2 + x^1 + 1$ | Ox199 | 0x207 |
| 37 | $x^{10} + x^9 + x^6 + x^3 + x^2 + x^1 + 1$ | Ox199 | Ox18F |
| 38 | $x^{10} + x^9 + x^6 + x^3 + x^2 + x^1 + 1$ | 0x09D | 0x103 |
| 39 | $x^{10} + x^9 + x^6 + x^3 + x^2 + x^1 + 1$ | 0x09D | Ox38B |
| 40 | $x^{10} + x^9 + x^6 + x^3 + x^2 + x^1 + 1$ | 0x09D | 0x207 |
| 41 | $x^{10} + x^9 + x^6 + x^3 + x^2 + x^1 + 1$ | 0x09D | Ox18F |
| 42 | $x^{10} + x^9 + x^6 + x^5 + x^4 + x^3 + x^2 + x^1 + 1$ | 0x0D9 | Ox19F |
| 43 | $x^{10} + x^9 + x^6 + x^5 + x^4 + x^3 + x^2 + x^1 + 1$ | 0x00D | Ox19F |

In a possible implementation of the first aspect, when the target polynomial is $x^{10} + x^9 + x^4 + x^1 + 1$, and the corresponding hexadecimal seeds in the two polarization directions are 0x0A9 and Ox143, respective 97 pilot symbols in the two polarization directions are shown in the following table:

| Polarization direction | Pilot symbols |
|---|---|
| Polarization 1 | A-Aj, -A+Aj, -A+Aj, -A+Aj, -A-Aj, A-Aj, A+Aj, -A+Aj, A-Aj, A+Aj, - A-Aj, A-Aj, -A+Aj, -A+Aj, -A+Aj, A+Aj, -A+Aj, -A-Aj, -A-Aj, A-Aj, - A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, - A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, - A-Aj, A-Aj, A+Aj, A+Aj, -A-Aj, A+Aj, A+Aj, A+Aj, -A-Aj, A+Aj, - A+Aj, A+Aj, -A-Aj, -A-Aj, A+Aj, -A-Aj, -A+Aj, -A+Aj, A-Aj, -A-Aj, - A+Aj, A-Aj, A+Aj, -A+Aj, -A-Aj, -A+Aj |
| Polarization 2 | A+Aj, -A-Aj, -A-Aj, A-Aj, A-Aj, -A+Aj, -A-Aj, A-Aj, A+Aj, -A-Aj, - A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, A+Aj, -A-Aj, A-Aj, -A-Aj, -A-Aj, A-Aj, - A+Aj, -A-Aj, A+Aj, A+Aj, -A-Aj, -A-Aj, A+Aj, A+Aj, A-Aj, A-Aj, A+Aj, -A-Aj, A+Aj, A+Aj, -A+Aj, -A-Aj, A+Aj, A-Aj, -A+Aj, A+Aj, - A+Aj, A-Aj, -A+Aj, -A+Aj, -A+Aj, -A+Aj, -A+Aj, -A-Aj, A+Aj, -A-Aj, A-Aj, -A-Aj, -A+Aj, -A+Aj, A-Aj, A-Aj |

In a possible implementation of the first aspect, in a polarization direction, $N_{PS}$=129, $N_{FAW}$=11, and $N_{RES}$=52 in the frame, M=64, and a quantity $N_F$ of symbols in the frame is 8256.

In a possible implementation of the first aspect, when the target polynomial and hexadecimal seeds in the two polarization directions are one row in the following table, a normalized amplitude of a sidelobe value of a periodic autocorrelation function of pilot symbols in a same polarization direction is not greater than 0.17, and a normalized amplitude of a periodic cross-correlation function value of pilot symbols in different polarization directions is not greater than 0.17:

| Index | Target polynomial | Seed in one polarization direction | Seed in the other polarization direction |
|---|---|---|---|
| 1 | $x^{10} + x^7 + x^3 + x + 1$ | 0x30C | Ox38F |
| 2 | $x^{10} + x^7 + x^3 + x + 1$ | 0x05C | Ox38F |
| 3 | $x^{10} + x^7 + x^3 + x + 1$ | Ox1C3 | Ox38F |
| 4 | $x^{10} + x^7 + x^3 + x + 1$ | 0x2E3 | Ox196 |
| 5 | $x^{10} + x^9 + x^8 + x^6 + x^2 + x^1 + 1$ | 0x2A3 | 0x22A |

(continued)

| Index | Target polynomial | Seed in one polarization direction | Seed in the other polarization direction |
|---|---|---|---|
| 6 | $x^{10} + x^9 + x^8 + x^4 + x^2 + x^1 + 1$ | 0x062 | 0x370 |
| 7 | $x^{10} + x^9 + x^8 + x^7 + x^5 + x^4 + 1$ | 0x1BB | 0x311 |
| 8 | $x^{10} + x^9 + x^4 + x^2 + 1$ | 0x3B2 | Ox11F |
| 9 | $x^{10} + x^9 + x^4 + x^2 + 1$ | 0x2CA | Ox11F |
| 10 | $x^{10} + x^9 + x^4 + x^2 + 1$ | 0x365 | 0x2F3 |
| 11 | $x^{10} + x^9 + x^4 + x^2 + 1$ | 0x083 | 0x2F3 |
| 12 | $x^{10} + x^9 + x^7 + x^6 + x^5 + x^4 + x^3 + x^2 + 1$ | 0x016 | 0x283 |
| 13 | $x^{10} + x^9 + x^7 + x^6 + x^5 + x^4 + x^3 + x^2 + 1$ | 0x05B | 0x283 |
| 14 | $x^{10} + x^8 + x^6 + x^1 + 1$ | 0x190 | 0x1FA |
| 15 | $x^{10} + x^8 + x^6 + x^1 + 1$ | 0x37B | 0x1FA |
| 16 | $x^{10} + x^8 + x^6 + x^1 + 1$ | 0x2C8 | 0x150 |
| 17 | $x^{10} + x^8 + x^6 + x^1 + 1$ | Ox321 | 0x150 |
| 18 | $x^{10} + x^8 + x^7 + x^6 + x^5 + x^4 + x^3 + x^1 + 1$ | Ox1D5 | Ox317 |
| 19 | $x^{10} + x^8 + x^7 + x^6 + x^5 + x^4 + x^3 + x^1 + 1$ | 0x357 | Ox317 |
| 20 | $x^{10} + x^9 + x^8 + x^6 + x^2 + x^1 + 1$ | 0x320 | 0x3C7 |
| 21 | $x^{10} + x^9 + x^8 + x^6 + x^2 + x^1 + 1$ | Ox351 | Ox115 |
| 22 | $x^{10} + x^9 + x^8 + x^6 + x^2 + x^1 + 1$ | 0x2A3 | 0x2C8 |
| 23 | $x^{10} + x^9 + x^8 + x^6 + x^2 + x^1 + 1$ | 0x2A3 | Ox164 |
| 24 | $x^{10} + x^9 + x^8 + x^6 + x^2 + x^1 + 1$ | 0x2A3 | Ox115 |
| 25 | $x^{10} + x^9 + x^8 + x^4 + x^2 + x^1 + 1$ | 0x062 | 0x2E0 |
| 26 | $x^{10} + x^9 + x^8 + x^4 + x^2 + x^1 + 1$ | 0x062 | 0x3DE |
| 27 | $x^{10} + x^9 + x^8 + x^4 + x^2 + x^1 + 1$ | 0x062 | 0x3EF |
| 28 | $x^{10} + x^9 + x^8 + x^4 + x^2 + x^1 + 1$ | 0x0C5 | 0x2E0 |
| 29 | $x^{10} + x^9 + x^8 + x^4 + x^2 + x^1 + 1$ | Ox1FB | 0x3BC |
| 30 | $x^{10} + x^6 + x^5 + x^3 + x^2 + x^1 + 1$ | 0x26B | 0x25D |

In a possible implementation of the first aspect, when the target polynomial is $x^{10}+x^7+x^3+x+1$, and the corresponding hexadecimal seeds in the two polarization directions are 0x2E3 and Ox196, respective 129 pilot symbols in the two polarization directions are shown in the following table:

| Polarization direction | Pilot symbols |
|---|---|
| Polarization 1 | A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, - A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, - A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, - A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, - A+Aj, -A-Aj, A-Aj, -A-Aj, A+Aj, A+Aj, A-Aj, -A-Aj, A-Aj, A-Aj, - A+Aj, A+Aj, A+Aj, -A-Aj, A+Aj, -A-Aj, -A-Aj |

(continued)

| Polarization direction | Pilot symbols |
|---|---|
| Polarization 2 | -A+Aj, A-Aj, A-Aj, -A+Aj, A-Aj, -A-Aj, A+Aj, -A-Aj, -A-Aj, A+Aj, A-Aj, A-Aj, -A-Aj, A-Aj, -A-Aj, A+Aj, A-Aj, A-Aj, A-Aj, A+Aj, -A-Aj, - A-Aj, A-Aj, -A-Aj, -A+Aj, -A+Aj, A+Aj, -A+Aj, -A-Aj, A-Aj, -A+Aj, A+Aj, -A+Aj, A+Aj, A-Aj, A+Aj, A+Aj, A-Aj, A-Aj, -A+Aj, A+Aj, A-Aj, -A-Aj, -A+Aj, -A+Aj, A-Aj, -A+Aj, A-Aj, A+Aj, A+Aj, A-Aj, -A-Aj, - A-Aj, A+Aj, -A+Aj, -A-Aj, A+Aj, A-Aj, -A-Aj, A-Aj, A+Aj, -A+Aj, - A+Aj, A-Aj, A-Aj, A-Aj, -A+Aj, A+Aj, -A+Aj, -A+Aj, A+Aj, A+Aj, -A-Aj, A-Aj, -A-Aj, A-Aj, -A+Aj, -A+Aj, -A+Aj, A+Aj, A+Aj, A-Aj, A+Aj, -A-Aj, -A+Aj, -A+Aj, A+Aj, A-Aj, -A+Aj, -A-Aj, A+Aj, -A+Aj, A-Aj, - A+Aj, A+Aj, -A+Aj, -A-Aj, A+Aj, -A+Aj, -A+Aj, -A-Aj, -A+Aj, A+Aj, A-Aj, -A-Aj, A+Aj, -A-Aj, A-Aj, A-Aj, A-Aj, -A+Aj, -A-Aj, -A-Aj, A+Aj, -A+Aj, -A+Aj, A+Aj, -A-Aj, -A+Aj, -A-Aj, A-Aj, -A-Aj, A-Aj, A+Aj, -A-Aj, -A+Aj, -A-Aj, A+Aj, -A-Aj |

In a possible implementation of the first aspect, the $N_{FAW}$ frame alignment word symbols are training symbols for link training.

A second aspect of this application provides a reception method for optical communication. The method includes: receiving a frame including a plurality of symbols, where in a polarization direction of two polarization directions, the frame includes $N_{FAW}$ frame alignment word symbols, $N_{PS}$ pilot symbols, and $N_{RES}$ reserved symbols, the two polarization directions are orthogonal to each other, one symbol in every M symbols in the frame is a pilot symbol in the polarization direction, M is an integer greater than 1, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number; and decoding the received frame.

In the second aspect, the frame including the plurality of symbols that is received by a receiving device is not further divided into subframes, therefore has a simple structure, and a transmission delay is low. In addition, the $N_{FAW}$ frame alignment word symbols, the $N_{PS}$ pilot symbols, and the $N_{RES}$ reserved symbols help the receiving device better restore signal quality. Therefore, it can be learned that the frame structure in the transmission method provided in the second aspect has a simple structure and a low transmission delay, and can further improve quality of a signal restored by the receiving device.

In a possible implementation of the second aspect, in the polarization direction, there is one symbol serving as both a frame alignment word symbol and a pilot symbol in the frame, $N_{FAW} + N_{RES} = M$, and $N_{FAW} + N_{PS}$ is an odd number.

In this possible implementation, one symbol may serve as both a pilot symbol and a frame alignment word symbol. In other words, in the frame alignment word symbol, there is a symbol serving as a pilot. The frame structure can help the receiving device quickly restore a signal.

In a possible implementation of the second aspect, the pilot symbols are generated by using a target polynomial and a seed, and a combination of ($N_{FAW} + N_{PS} - 1$) symbols of the $N_{PS}$ pilot symbols and the $N_{FAW}$ frame alignment word symbols achieves direct current balance.

In this possible implementation, the ($N_{FAW} + N_{PS} - 1$) symbols achieve direct current balance, to be specific, in each polarization direction, a sum of real parts of complex numbers corresponding to frame alignment word symbols and pilot symbols in one frame is 0, and a sum of imaginary parts is also 0. The frame helps the receiving device better restore a signal.

In a possible implementation of the second aspect, in the polarization direction, there is no symbol serving as both a frame alignment word symbol and a pilot symbol in the frame, $N_{FAW} + N_{RES} + 1 = M$, and $N_{FAW} + N_{PS}$ is an even number.

In this possible implementation, in a polarization direction, there is no symbol serving as both a frame alignment word symbol and a pilot symbol in the frame. In other words, a symbol serving as a pilot is independent of a frame alignment word symbol. In this way, accuracy of signal restoration of the receiving device can be improved.

In a possible implementation of the second aspect, the pilot symbols are generated by using a target polynomial and a seed, and a combination of ($N_{FAW} + N_{PS}$) symbols of the $N_{PS}$ pilot symbols and the $N_{FAW}$ frame alignment word symbols achieves direct current balance.

In this possible implementation, the ($N_{FAW} + N_{PS}$) symbols achieve direct current balance, and such a frame helps the receiving device better restore a signal.

In a possible implementation of the second aspect, the $N_{FAW}$ frame alignment word symbols achieve direct current balance, and $N_{FAW}$ is an even number.

In this possible implementation, when $N_{FAW}$ is an even number, an effect of direct current balance can be enhanced.

In a possible implementation of the second aspect, the $N_{PS}$ pilot symbols achieve direct current balance, and $N_{PS}$ is an even number.

In this possible implementation, when $N_{PS}$ is an even number, an effect of direct current balance can be enhanced.

In a possible implementation of the second aspect, a value of $N_{FAW}$ is 22 or 11.

In a possible implementation of the second aspect, the plurality of symbols in the frame are in a 16QAM modulation format, and a value of A is $\pm 1$, $\pm 3$, or $\pm\sqrt{5}$.

In a possible implementation of the second aspect, a value of M is 64.

In a possible implementation of the second aspect, in a polarization direction, $N_{PS}$=97, $N_{FAW}$=22, and $N_{RES}$=42 in the frame, M=64, and a quantity $N_F$ of symbols in the frame is 6208.

In a possible implementation of the second aspect, when the target polynomial and hexadecimal seeds in the two polarization directions are one row in the following table, a normalized amplitude of a sidelobe value of a periodic autocorrelation function of pilot symbols in a same polarization direction is not greater than 0.25, and a normalized amplitude of a periodic cross-correlation function value of pilot symbols in different polarization directions is not greater than 0.25:

| Index | Target polynomial | Seed in a polarization direction 1 | Seed in a polarization direction 2 |
|---|---|---|---|
| 1 | $x^{10} + x^9 + x^8 + x^6 + x^5 + x^4 + x^3 + x^2 + 1$ | 0x255 | 0x307 |
| 2 | $x^{10} + x^8 + x^7 + x^6 + x^5 + x^4 + x^2 + x^1 + 1$ | 0x005 | 0x13B |
| 3 | $x^{10} + x^8 + x^7 + x^6 + x^5 + x^4 + x^2 + x^1 + 1$ | 0x005 | 0x277 |
| 4 | $x^{10} + x^9 + x^8 + x^5 + 1$ | 0x291 | 0x137 |
| 5 | $x^{10} + x^9 + x^5 + x^2 + 1$ | 0x0E9 | 0x303 |
| 6 | $x^{10} + x^9 + x^5 + x^2 + 1$ | 0x0E9 | 0x03B |
| 7 | $x^{10} + x^9 + x^5 + x^2 + 1$ | 0x0E9 | 0x207 |
| 8 | $x^{10} + x^9 + x^8 + x^4 + x^3 + x^2 + 1$ | 0x18D | 0x15F |
| 9 | $x^{10} + x^9 + x^8 + x^4 + x^3 + x^2 + 1$ | 0x35D | 0x15F |
| 10 | $x^{10} + x^9 + x^8 + x^6 + x^5 + x^4 + x^3 + x^2 + 1$ | 0x255 | 0x183 |
| 11 | $x^{10} + x^9 + x^4 + x^1 + 1$ | 0x0A9 | 0x143 |
| 12 | $x^{10} + x^9 + x^8 + x^7 + x^4 + x^1 + 1$ | 0x361 | 0x367 |
| 13 | $x^{10} + x^9 + x^8 + x^7 + x^4 + x^1 + 1$ | 0x361 | 0x1FF |
| 14 | $x^{10} + x^9 + x^8 + x^7 + x^4 + x^1 + 1$ | 0x361 | 0x3FF |
| 15 | $x^{10} + x^9 + x^8 + x^7 + x^4 + x^1 + 1$ | 0x339 | 0x1FF |
| 16 | $x^{10} + x^9 + x^8 + x^7 + x^4 + x^1 + 1$ | 0x339 | 0x3FF |
| 17 | $x^{10} + x^9 + x^8 + x^7 + x^4 + x^1 + 1$ | 0x205 | 0x203 |
| 18 | $x^{10} + x^9 + x^8 + x^7 + x^4 + x^1 + 1$ | 0x205 | 0x1FF |
| 19 | $x^{10} + x^9 + x^8 + x^7 + x^4 + x^1 + 1$ | 0x205 | 0x3FF |
| 20 | $x^{10} + x^9 + x^8 + x^7 + x^4 + x^1 + 1$ | 0x365 | 0x203 |
| 21 | $x^{10} + x^9 + x^8 + x^7 + x^4 + x^1 + 1$ | 0x3FD | 0x367 |
| 22 | $x^{10} + x^9 + x^8 + x^7 + x^6 + x^5 + x^4 + x^1 + 1$ | 0x091 | 0x25B |
| 23 | $x^{10} + x^9 + x^8 + x^7 + x^6 + x^5 + x^4 + x^1 + 1$ | 0x091 | 0x0B7 |
| 24 | $x^{10} + x^8 + x^7 + x^3 + x^2 + x^1 + 1$ | 0x359 | 0x083 |
| 25 | $x^{10} + x^8 + x^7 + x^3 + x^2 + x^1 + 1$ | 0x3B5 | 0x083 |
| 26 | $x^{10} + x^9 + x^6 + x^3 + x^2 + x^1 + 1$ | 0x389 | 0x103 |
| 27 | $x^{10} + x^9 + x^6 + x^3 + x^2 + x^1 + 1$ | 0x389 | 0x38B |
| 28 | $x^{10} + x^9 + x^6 + x^3 + x^2 + x^1 + 1$ | 0x389 | 0x207 |
| 29 | $x^{10} + x^9 + x^6 + x^3 + x^2 + x^1 + 1$ | 0x389 | 0x18F |

(continued)

| Index | Target polynomial | Seed in a polarization direction 1 | Seed in a polarization direction 2 |
|---|---|---|---|
| 30 | $x^{10} + x^9 + x^6 + x^3 + x^2 + x^1 + 1$ | 0x099 | 0x103 |
| 31 | $x^{10} + x^9 + x^6 + x^3 + x^2 + x^1 + 1$ | 0x099 | 0x38B |
| 32 | $x^{10} + x^9 + x^6 + x^3 + x^2 + x^1 + 1$ | 0x099 | 0x207 |
| 33 | $x^{10} + x^9 + x^6 + x^3 + x^2 + x^1 + 1$ | 0x099 | 0x18F |
| 34 | $x^{10} + x^9 + x^6 + x^3 + x^2 + x^1 + 1$ | 0x199 | 0x103 |
| 35 | $x^{10} + x^9 + x^6 + x^3 + x^2 + x^1 + 1$ | 0x199 | 0x38B |
| 36 | $x^{10} + x^9 + x^6 + x^3 + x^2 + x^1 + 1$ | 0x199 | 0x207 |
| 37 | $x^{10} + x^9 + x^6 + x^3 + x^2 + x^1 + 1$ | 0x199 | 0x18F |
| 38 | $x^{10} + x^9 + x^6 + x^3 + x^2 + x^1 + 1$ | 0x09D | 0x103 |
| 39 | $x^{10} + x^9 + x^6 + x^3 + x^2 + x^1 + 1$ | 0x09D | 0x38B |
| 40 | $x^{10} + x^9 + x^6 + x^3 + x^2 + x^1 + 1$ | 0x09D | 0x207 |
| 41 | $x^{10} + x^9 + x^6 + x^3 + x^2 + x^1 + 1$ | 0x09D | 0x18F |
| 42 | $x^{10} + x^9 + x^6 + x^5 + x^4 + x^3 + x^2 + x^1 + 1$ | 0x0D9 | 0x19F |
| 43 | $x^{10} + x^9 + x^6 + x^5 + x^4 + x^3 + x^2 + x^1 + 1$ | 0x00D | 0x19F |

In a possible implementation of the second aspect, when the target polynomial is $x^{10} + x^9 + x^4 + x^1 + 1$, and the corresponding hexadecimal seeds in the two polarization directions are 0x0A9 and Ox143, respective 97 pilot symbols in the two polarization directions are shown in the following table:

| Polarization direction | Pilot symbols |
|---|---|
| Polarization 1 | A-Aj, -A+Aj, -A+Aj, -A+Aj, -A-Aj, A-Aj, A+Aj, -A+Aj, A-Aj, A+Aj, - A-Aj, A-Aj, -A+Aj, -A+Aj, -A+Aj, A+Aj, -A+Aj, -A-Aj, -A-Aj, A-Aj, - A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, - A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, - A-Aj, A-Aj, A+Aj, A+Aj, -A-Aj, A+Aj, A+Aj, A+Aj, -A-Aj, A+Aj, - A+Aj, A+Aj, -A-Aj, -A-Aj, A+Aj, -A-Aj, -A+Aj, -A+Aj, A-Aj, -A-Aj, - A+Aj, A-Aj, A+Aj, -A+Aj, -A-Aj, -A+Aj |
| Polarization 2 | A+Aj, -A-Aj, -A-Aj, A-Aj, A-Aj, -A+Aj, -A-Aj, A-Aj, A+Aj, -A-Aj, - A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, A+Aj, -A-Aj, A-Aj, -A-Aj, -A-Aj, A-Aj, - A+Aj, -A-Aj, A+Aj, A+Aj, -A-Aj, -A-Aj, A+Aj, A+Aj, A-Aj, A-Aj, A+Aj, -A-Aj, A+Aj, A+Aj, -A+Aj, -A-Aj, A+Aj, A-Aj, -A+Aj, A+Aj, - A+Aj, A-Aj, -A+Aj, -A+Aj, -A+Aj, -A+Aj, -A+Aj, -A-Aj, A+Aj, -A-Aj, A-Aj, -A-Aj, -A+Aj, -A+Aj, A-Aj, A-Aj |

In a possible implementation of the second aspect, in a polarization direction, $N_{PS}$=129, $N_{FAW}$=11, and $N_{RES}$=52 in the frame, M=64, and a quantity $N_F$ of symbols in the frame is 6208.

In a possible implementation of the second aspect, when the target polynomial and hexadecimal seeds in the two polarization directions are one row in the following table, a normalized amplitude of a sidelobe value of a periodic autocorrelation function of pilot symbols in a same polarization direction is not greater than 0.17, and a normalized amplitude of a periodic cross-correlation function value of pilot symbols in different polarization directions is not greater than 0.17:

| Index | Target polynomial | Seed in one polarization direction | Seed in the other polarization direction |
|---|---|---|---|
| 1 | $x^{10} + x^7 + x^3 + x + 1$ | 0x30C | 0x38F |
| 2 | $x^{10} + x^7 + x^3 + x + 1$ | 0x05C | 0x38F |
| 3 | $x^{10} + x^7 + x^3 + x + 1$ | 0x1C3 | 0x38F |
| 4 | $x^{10} + x^7 + x^3 + x + 1$ | 0x2E3 | 0x196 |
| 5 | $x^{10} + x^9 + x^8 + x^6 + x^2 + x^1 + 1$ | 0x2A3 | 0x22A |
| 6 | $x^{10} + x^9 + x^8 + x^4 + x^2 + x^1 + 1$ | 0x062 | 0x370 |
| 7 | $x^{10} + x^9 + x^8 + x^7 + x^5 + x^4 + 1$ | 0x1BB | 0x311 |
| 8 | $x^{10} + x^9 + x^4 + x^2 + 1$ | 0x3B2 | 0x11F |
| 9 | $x^{10} + x^9 + x^4 + x^2 + 1$ | 0x2CA | 0x11F |
| 10 | $x^{10} + x^9 + x^4 + x^2 + 1$ | 0x365 | 0x2F3 |
| 11 | $x^{10} + x^9 + x^4 + x^2 + 1$ | 0x083 | 0x2F3 |
| 12 | $x^{10} + x^9 + x^7 + x^6 + x^5 + x^4 + x^3 + x^2 + 1$ | 0x016 | 0x283 |
| 13 | $x^{10} + x^9 + x^7 + x^6 + x^5 + x^4 + x^3 + x^2 + 1$ | 0x05B | 0x283 |
| 14 | $x^{10} + x^8 + x^6 + x^1 + 1$ | 0x190 | 0x1FA |
| 15 | $x^{10} + x^8 + x^6 + x^1 + 1$ | 0x37B | 0x1FA |
| 16 | $x^{10} + x^8 + x^6 + x^1 + 1$ | 0x2C8 | 0x150 |
| 17 | $x^{10} + x^8 + x^6 + x^1 + 1$ | 0x321 | 0x150 |
| 18 | $x^{10} + x^8 + x^7 + x^6 + x^5 + x^4 + x^3 + x^1 + 1$ | 0x1D5 | 0x317 |
| 19 | $x^{10} + x^8 + x^7 + x^6 + x^5 + x^4 + x^3 + x^1 + 1$ | 0x357 | 0x317 |
| 20 | $x^{10} + x^9 + x^8 + x^6 + x^2 + x^1 + 1$ | 0x320 | 0x3C7 |
| 21 | $x^{10} + x^9 + x^8 + x^6 + x^2 + x^1 + 1$ | 0x351 | 0x115 |
| 22 | $x^{10} + x^9 + x^8 + x^6 + x^2 + x^1 + 1$ | 0x2A3 | 0x2C8 |
| 23 | $x^{10} + x^9 + x^8 + x^6 + x^2 + x^1 + 1$ | 0x2A3 | 0x164 |
| 24 | $x^{10} + x^9 + x^8 + x^6 + x^2 + x^1 + 1$ | 0x2A3 | 0x115 |
| 25 | $x^{10} + x^9 + x^8 + x^4 + x^2 + x^1 + 1$ | 0x062 | 0x2EO |
| 26 | $x^{10} + x^9 + x^8 + x^4 + x^2 + x^1 + 1$ | 0x062 | 0x3DE |
| 27 | $x^{10} + x^9 + x^8 + x^4 + x^2 + x^1 + 1$ | 0x062 | 0x3EF |
| 28 | $x^{10} + x^9 + x^8 + x^4 + x^2 + x^1 + 1$ | 0x0C5 | 0x2E0 |
| 29 | $x^{10} + x^9 + x^8 + x^4 + x^2 + x^1 + 1$ | 0x1FB | 0x3BC |
| 30 | $x^{10} + x^6 + x^5 + x^3 + x^2 + x^1 + 1$ | 0x26B | 0x25D |

In a possible implementation of the second aspect, when the target polynomial is $x^{10}+x^7+x^3+x+1$, and the corresponding hexadecimal seeds in the two polarization directions are 0x2E3 and Ox196, respective 129 pilot symbols in the two polarization directions are shown in the following table:

| Polarization direction | Pilot symbols |
|---|---|
| Polarization 1 | A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, - A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, - A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, - A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, - A+Aj, -A-Aj, A-Aj, -A-Aj, A+Aj, A+Aj, A-Aj, -A-Aj, A-Aj, A-Aj, - A+Aj, A+Aj, A+Aj, -A-Aj, A+Aj, -A-Aj, -A-Aj |
| Polarization 2 | -A+Aj, A-Aj, A-Aj, -A+Aj, A-Aj, -A-Aj, A+Aj, -A-Aj, -A-Aj, A+Aj, A-Aj, A-Aj, -A-Aj, A-Aj, -A-Aj, A+Aj, A-Aj, A-Aj, A-Aj, A+Aj, -A-Aj, - A-Aj, A-Aj, -A-Aj, -A+Aj, -A+Aj, A+Aj, -A+Aj, -A-Aj, A-Aj, -A+Aj, A+Aj, -A+Aj, A+Aj, A-Aj, A+Aj, A+Aj, A-Aj, A-Aj, -A+Aj, A+Aj, A-Aj, -A-Aj, -A+Aj, -A+Aj, A-Aj, -A+Aj, A-Aj, A+Aj, A+Aj, A-Aj, -A-Aj, - A-Aj, A+Aj, -A+Aj, -A-Aj, A+Aj, A-Aj, -A-Aj, A-Aj, A+Aj, -A+Aj, - A+Aj, A-Aj, A-Aj, A-Aj, -A+Aj, A+Aj, -A+Aj, -A+Aj, A+Aj, A+Aj, -A-Aj, A-Aj, -A-Aj, A-Aj, -A+Aj, -A+Aj, -A+Aj, A+Aj, A+Aj, A-Aj, A+Aj, -A-Aj, -A+Aj, -A+Aj, A+Aj, A-Aj, -A+Aj, -A-Aj, A+Aj, -A+Aj, A-Aj, - A+Aj, A+Aj, -A+Aj, -A-Aj, A+Aj, -A+Aj, -A+Aj, -A-Aj, -A+Aj, A+Aj, A-Aj, -A-Aj, A+Aj, -A-Aj, A-Aj, A-Aj, A-Aj, -A+Aj, -A-Aj, -A-Aj, A+Aj, -A+Aj, -A+Aj, A+Aj, -A-Aj, -A+Aj, -A-Aj, A-Aj, -A-Aj, A-Aj, A+Aj, -A-Aj, -A+Aj, -A-Aj, A+Aj, -A-Aj |

In a possible implementation of the second aspect, the $N_{FAW}$ frame alignment word symbols are training symbols for link training.

A third aspect of this application provides a transmitting device for optical communication. The transmitting device is configured to perform the method in the first aspect or any one of the possible implementations of the first aspect. Specifically, the transmitting device includes modules or units configured to perform the method in the first aspect or any one of the possible implementations of the first aspect, for example, a processing unit and a transmitting unit.

A fourth aspect of this application provides a receiving device for optical communication. The receiving device is configured to perform the method in the second aspect or any one of the possible implementations of the second aspect. Specifically, the receiving device includes modules or units configured to perform the method in the second aspect or any one of the possible implementations of the second aspect, for example, a receiving unit and a processing unit.

According to a fifth aspect of this application, a transmitting device for optical communication is provided. The transmitting device includes a processor and a memory. The memory is configured to store instructions, and the processor is configured to execute the instructions, to enable the transmitting device to perform the method in the first aspect or any one of the possible implementations of the first aspect.

According to a sixth aspect of this application, a receiving device for optical communication is provided. The receiving device includes a processor and a memory. The memory is configured to store instructions, and the processor is configured to execute the instructions, to enable the receiving device to perform the method in the second aspect or any one of the possible implementations of the second aspect.

It should be understood that, the processor may be a central processing unit (Central Processing Unit, "CPU" for short), or may be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor or the like. This is not limited in this application.

According to a seventh aspect of this application, a computer-readable storage medium is provided. The computer-readable storage medium stores instructions. When the instructions are run on a transmitting device, the transmitting device is enabled to perform the method in the first aspect or any one of the possible implementations of the first aspect.

According to an eighth aspect of this application, a computer-readable storage medium is provided. The computer-readable storage medium stores instructions. When the instructions are run on a receiving device, the receiving device is enabled to perform the method in the second aspect or any one of the possible implementations of the second aspect.

According to a ninth aspect of this application, a computer program product including instructions is provided. When the computer program product runs on a transmitting device, the transmitting device is enabled to perform the method in the first aspect or any one of the possible implementations of the first aspect. It should be understood that the transmitting device may be a chip, a processor, or the like. This is not limited in this application.

According to a tenth aspect of this application, a computer program product including instructions is provided, or a receiving device is enabled to perform the method in the second aspect or any one of the possible implementations of the second aspect. It should be understood that the receiving device may be a chip, a processor, or the like. This is not limited in this application.

An eleventh aspect of this application provides a chip system. The chip system includes one or more interface circuits and one or more processors. The interface circuit is interconnected to the processor through a line. The interface circuit is configured to: receive a signal from a memory of a terminal device, and transmit a signal to the processor, where the signal includes computer instructions stored in the memory. When the processor executes the computer instructions, a transmitting device performs the method in the first aspect or any one of the possible implementations of the first aspect.

A twelfth aspect of this application provides a chip system. The chip system includes one or more interface circuits and one or more processors. The interface circuit is interconnected to the processor through a line. The interface circuit is configured to: receive a signal from a memory of a cloud device, and transmit a signal to the processor, where the signal includes computer instructions stored in the memory. When the processor executes the computer instructions, a receiving device performs the method in the second aspect or any one of the possible implementations of the second aspect.

According to a thirteenth aspect of this application, a system for optical communication is provided. The system includes the transmitting device in the third aspect and the receiving device in the fourth aspect; or the transmitting device in the fifth aspect and the receiving device in the sixth aspect.

The transmission method for optical communication provided in this application includes a new-structure frame. The frame includes $N_{FAW}$ frame alignment word symbols, $N_{PS}$ pilot symbols, $N_{RES}$ reserved symbols, and some symbols that carry information. The frame is not further divided into subframes, and therefore has a simple structure, and a transmission delay is low. In addition, the $N_{FAW}$ frame alignment word symbols, the $N_{PS}$ pilot symbols, and the $N_{RES}$ reserved symbols help the receiving device better restore signal quality. It can be learned that the frame structure in the transmission method for optical communication provided in this application has a simple structure and a low transmission delay, and can further improve quality of a signal restored by the receiving device.

## BRIEF DESCRIPTION OF DRAWINGS

FIG. 1 is a block diagram of a structure of a communication system;

FIG. 2 is a diagram of a framing process according to an embodiment of this application;

FIG. 3 is a diagram of another framing process according to an embodiment of this application;

FIG. 4 is a diagram of an embodiment of a transmission method for optical communication according to an embodiment of this application;

FIG. 5A is a location diagram of frame alignment word symbols or pilot symbols in a constellation diagram in DP-16QAM;

FIG. 5B is another location diagram of frame alignment word symbols or pilot symbols in a constellation diagram in DP-16QAM;

FIG. 6A is a diagram of a structure of a frame according to an embodiment of this application;

FIG. 6B is another diagram of a structure of a frame according to an embodiment of this application;

FIG. 7 is a diagram of a pilot symbol generation structure according to an embodiment of this application;

FIG. 8 is a diagram of a structure of another frame according to an embodiment of this application;

FIG. 9 is a diagram of a pilot symbol generation structure according to an embodiment of this application;

FIG. 10 includes a diagram of a periodic autocorrelation result of a specific pilot symbol sequence in an X polarization direction, a diagram of a periodic autocorrelation result of a specific pilot symbol sequence in a Y polarization direction, and a diagram of a periodic cross-correlation result of a specific pilot symbol sequence in two polarization directions according to an embodiment of this application;

FIG. 11 is a diagram of a structure of another frame according to an embodiment of this application;

FIG. 12 is a diagram of a pilot symbol generation structure according to an embodiment of this application;

FIG. 13 includes a diagram of a periodic autocorrelation result of a specific pilot symbol sequence in an X polarization direction, a diagram of a periodic autocorrelation result of a specific pilot symbol sequence in a Y polarization direction, and a diagram of a periodic cross-correlation result of a specific pilot symbol sequence in two polarization directions according to an embodiment of this application;

FIG. 14 is a diagram of a structure of a transmitting device according to an embodiment of this application;

FIG. 15 is a diagram of a structure of a receiving device according to an embodiment of this application; and

FIG. 16 is a diagram of a structure of a communication device according to an embodiment of this application.

**EP 4 510 471 A1**

## DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, terms such as "first" and "second" are intended to distinguish between similar objects, but do not necessarily indicate a specific order or sequence. It should be understood that data used in such a way are interchangeable in proper circumstances, so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Embodiments of this application provide a transmission method for optical communication, to resolve problems that the transmission method cannot be applied to a scenario of over 400 Gbps and has a high delay and high complexity, or quality of a signal restored by a receiving device is poor. This application further provides a corresponding device, a system, a computer-readable storage medium, a computer program product, and the like. Details are separately described below.

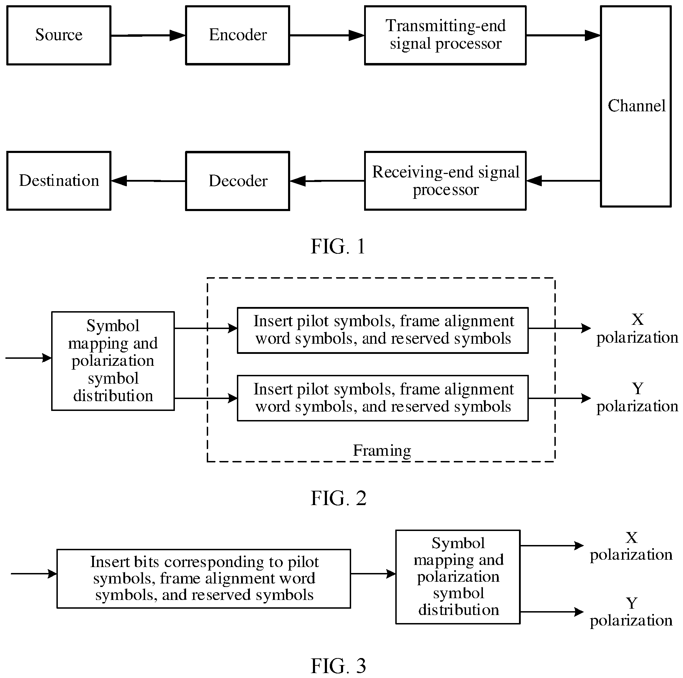

Before embodiments of this application are described in detail, application scenarios of embodiments of this application are first described. FIG. 1 is a block diagram of a structure of a communication system. At a transmitting end, a source provides a to-be-sent data stream; an encoder receives and encodes the data stream; and encoded codeword information combining parity bits and information bits is transmitted to a transmitting-end signal processor for framing, and is transmitted through a channel to a receiving device. After receiving a signal with distortion resulting from noise or other impairments on the channel, the receiving device transmits the signal to a receiving-end signal processor for dispersion compensation, synchronization, phase recovery, and other operations. Then, a decoder decodes the signal to restore original data and transmits the data to a destination. The method provided in this application is applied to the transmitting-end signal processor shown in FIG. 1, and is an extremely important part in the communication system.

In the transmitting-end signal processor, the framing process may be shown in FIG. 2 or FIG. 3. In a manner of framing, as shown in FIG. 2, symbol mapping and polarization symbol distribution are performed on the received data sequence. The symbol mapping includes but is not limited to quadrature phase shift keying (Quadrature Phase Shift Keying, QPSK) and quadrature amplitude modulation (Quadrature Amplitude Modulation, QAM), and then the polarization symbol distribution is performed to obtain a dual-polarization (Dual-polarization, DP) symbol, for example, DP-QPSK, DP-8QAM, DP-16QAM, DP-32QAM, and DP-64QAM. The following framing is performed on a specific quantity of dual-polarization symbols: inserting frame alignment word (frame alignment word, FAW) symbols, reserved symbols (reserved symbols, RESs), and pilot symbols (pilot symbols, PSs) in each of an X polarization direction and a Y polarization direction, to obtain a to-be-sent dual-polarization symbol sequence, namely, a frame (frame). In this application, the frame may also be referred to as a digital signal processing (Digital signal processing, DPS) frame. It should be noted that, after the symbol mapping, the symbols may be further interleaved, and the foregoing framing is performed on interleaved symbols. In this application, one dual-polarization symbol may be represented by two symbols, where one symbol is located in the X polarization direction, and the other symbol is located in the Y polarization direction. Each symbol may be represented by a complex number. For example, a symbol modulated using 16QAM may be represented by any one of the following 16 complex numbers: $\pm1\pm1j$, $\pm1\pm3j$, $\pm3\pm1j$, and $\pm3\pm3j$. It should be understood that in some cases, a real part and an imaginary part are normalized, but the essence does not change. Further, a sequence having N dual-polarization symbols may be completely represented by two complex sequences whose lengths are N, where one complex sequence represents a symbol on the X polarization, and the other complex sequence represents a symbol on the Y polarization. Each complex number sequence whose length is N is represented by a real part sequence whose length is N and an imaginary part sequence whose length is N, where N is an integer greater than 1.

Generally, the received data sequence is an information and parity sequence obtained through forward error correction (Forward Error Correction, FEC). The framing operation shown in FIG. 2 is performed on the symbols. Alternatively, as shown in FIG. 3, for a received data sequence, bits corresponding to frame alignment word symbols, reserved symbols, and pilot symbols may be inserted before symbol mapping according to a used symbol mapping rule, and then the symbol mapping and polarization symbol distribution may be performed to obtain a same frame as that obtained in the operation in FIG. 2. In this case, before the symbol mapping, interleaving may be further performed on a bit sequence into which the bits corresponding to the foregoing symbols are inserted, and then the symbol mapping and the polarization symbol distribution are performed to obtain a same frame as that obtained in the operation in FIG. 2. It should be understood that another framing manner is not excluded, and details are not described in this application.

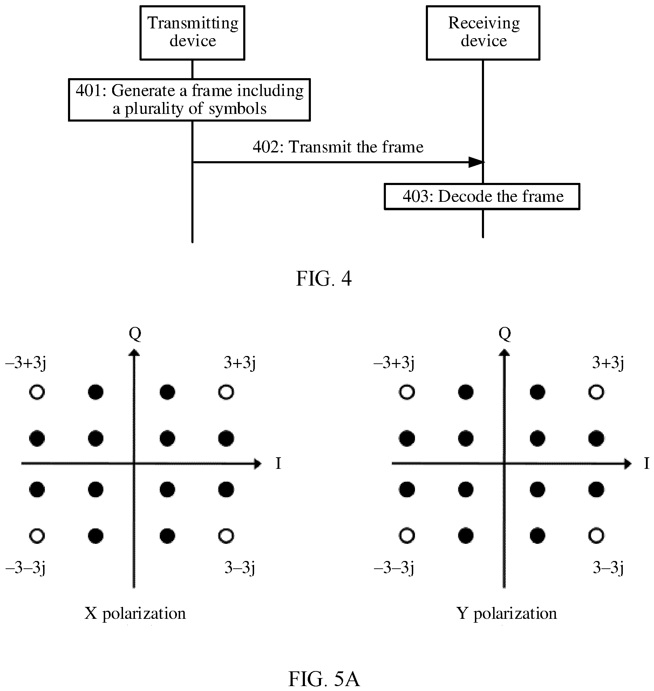

Embodiments of this application provide a transmission method for optical communication. As shown in FIG. 4, an embodiment of the transmission method includes the following steps.

13

401: A transmitting device generates a frame including a plurality of symbols.

In a polarization direction of two polarization directions, the frame includes $N_{FAW}$ frame alignment word symbols, $N_{PS}$ pilot symbols, and $N_{RES}$ reserved symbols, the two polarization directions are orthogonal to each other, one symbol in every M symbols in the frame is a pilot symbol in the polarization direction, M is an integer greater than 1, and $N_{FAW} + N_{RES}$ = M or $N_{FAW} + N_{RES} + 1$ = M; and each of the frame alignment word symbols and the pilot symbols is one of -A-Aj, -A+Aj, A-Aj, and A+Aj, and A is a real number.

402: The transmitting device transmits the frame including the plurality of symbols. Correspondingly, a receiving device receives the frame including the plurality of symbols.

403: The receiving device decodes the frame.

The transmission method for optical communication provided in this application includes a new-structure frame. The frame includes $N_{FAW}$ frame alignment word symbols, $N_{PS}$ pilot symbols, $N_{RES}$ reserved symbols, and some symbols that carry information. The frame is not further divided into subframes, therefore has a simple structure, and a transmission delay is low. In addition, the $N_{FAW}$ frame alignment word symbols, the $N_{PS}$ pilot symbols, and the $N_{RES}$ reserved symbols help the receiving device better restore signal quality. It can be learned that the frame structure in the transmission method for optical communication provided in this application has a simple structure and a low transmission delay, and can further improve quality of a signal restored by the receiving device.

In the foregoing embodiment, a value of A is determined based on a modulation format used during symbol generation. In some actual application scenarios, -A-Aj, -A+Aj, A-Aj, and A+Aj are symbols in a constellation diagram of the used modulation format. For example, if QPSK is used, there are only four symbols. In this case, A=$\pm$1, and each frame alignment word symbol may be represented by one of -1-1j, -1+1j, 1-1j, and 1+1j. In one frame, frame alignment word symbols represented by the four complex numbers all exist, and the same is true for pilot symbols. If 16QAM is used, there are 16 symbols. In this case, A=$\pm$1 or $\pm$3. Generally, both frame alignment word symbols and pilot symbols are the outermost four symbols in the constellation diagram, as indicated by hollow symbols in FIG. 5A. In this case, when A=3 or -3, each frame alignment word symbol may be represented by one of -3-3j, -3+3j, 3-3j, and 3+3j. In one frame, frame alignment word symbols represented by the four complex numbers also exist, and the same is true for pilot symbols. Similarly, if 64QAM is used, A=$\pm$1, $\pm$3, $\pm$5, or $\pm$7. Generally, in complex numbers representing a frame alignment word symbol and a pilot symbol, A=$\pm$5 or $\pm$7. Assuming that A=5 or -5, each frame alignment word symbol may be represented by one of -5-5j, -5+5j, 5-5j, and 5+5j. In one frame, frame alignment word symbols represented by the four complex numbers all exist. Similarly, the same is true for pilot symbols. Alternatively, a higher-order modulation format may be used, and details are not described in this application. In an actual transmission process, a symbol error probability can be low, and channel estimation can be facilitated.

It should be noted that, alternatively, symbols in a constellation diagram may be compressed, and a value of A is also correspondingly compressed. 16QAM is used as an example, power normalization is performed on 16 symbols in a 16QAM constellation diagram. In this case, the value is changed to $\left\{ \pm \frac{1}{\sqrt{10}} \pm \frac{1}{\sqrt{10}}j, \ \pm \frac{1}{\sqrt{10}} \pm \frac{3}{\sqrt{10}}j, \ \pm \frac{3}{\sqrt{10}} \pm \frac{1}{\sqrt{10}}j, \ \pm \frac{3}{\sqrt{10}} \pm \frac{3}{\sqrt{10}}j \right\}$, and the value of A is $\frac{1}{\sqrt{10}}$ or $\frac{3}{\sqrt{10}}$. Alternatively, another manner of normalization may be used. This is not limited in this application.

It should be understood that when the pilot symbols and the frame alignment word symbols, -A-Aj, -A+Aj, A-Aj, and A+Aj, are the outermost four symbols in the constellation diagram, the frame alignment word symbols and the pilot symbols have high sensitivity (sensitivity), but have a large peak-to-average power (peak-to-average power) ratio. When values of the pilot symbols and the frame alignment word symbols, -A-Aj, -A+Aj, A-Aj, and A+Aj, are the innermost four symbols in the constellation diagram, the frame alignment word symbols and the pilots have small noise (noise), but have low sensitivity (sensitivity).

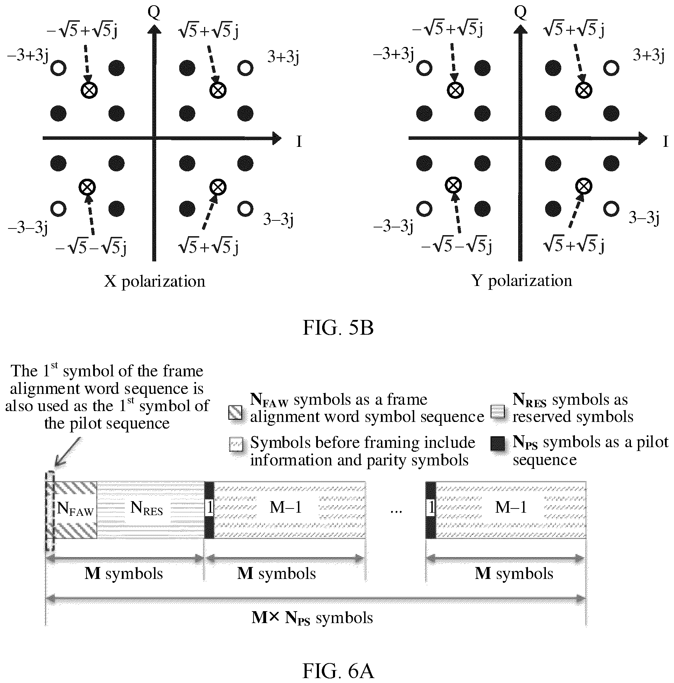

It should be noted that, in some actual application scenarios, the pilot symbols and the frame alignment word symbols, -A-Aj, -A+Aj, A-Aj, and A+Aj, may not be symbols in a constellation diagram of a used modulation format, and the symbols may be four symbols in a middle area of the outermost four symbols and the innermost four symbols in the constellation diagram. In this case, the frame alignment word symbols and the pilot symbols have fair noise and sensitivity, but have a small peak-to-average power ratio. 16QAM is used as an example, values of 16 symbols in a 16QAM constellation diagram are $\{\pm1 \pm 1j, \pm1 \pm 3j, \pm3 \pm 1j, \pm3 \pm 3j\}$, and a value of the real number A satisfies $1 \le A \le 3$. More specifically, as shown in FIG. 5B, the outermost four symbols in the constellation diagram are 3 + 3j, 3 - 3j, -3 + 3j, and -3 - 3j, and the innermost four symbols in the constellation diagram are 1 + 1j, 1 - 1j, -1 + 1j, and -1 - 1j. Values of the pilot symbols and the frame alignment word symbols, -A-Aj, -A+Aj, A-Aj, and A+Aj, may be four symbols in a middle area of the outermost four symbols and the innermost four symbols in the 16QAM constellation diagram. A specific value of the real number A may be selected based on an actual application scenario, so that a peak-to-average power ratio, noise, and sensitivity of the frame alignment word symbols and the pilots have a good compromise. For example, the real number $A = \sqrt{5}$, and the values of the pilot symbols and the frame alignment word symbols are

$\{-\sqrt{5}-\sqrt{5}\mathrm{j},\ -\sqrt{5}+\sqrt{5}\mathrm{j},\ \sqrt{5}-\sqrt{5}\mathrm{j},\ \sqrt{5}+\sqrt{5}\mathrm{j}\}$ . In addition, when power normalization is performed on the 16 symbols in the 16QAM constellation diagram and values are $\{\pm\frac{1}{\sqrt{10}}\pm\frac{1}{\sqrt{10}}\mathrm{j},\ \pm\frac{1}{\sqrt{10}}\pm\frac{3}{\sqrt{10}}\mathrm{j},\ \pm\frac{3}{\sqrt{10}}\pm\frac{1}{\sqrt{10}}\mathrm{j},\ \pm\frac{3}{\sqrt{10}}\pm\frac{3}{\sqrt{10}}\mathrm{j}\}$ , a value of the real number A satisfies $\frac{1}{\sqrt{10}}\leq A\leq\frac{3}{\sqrt{10}}$ . For example, the real number $A=\frac{\sqrt{2}}{2}$ , and the values of the pilot symbols and the frame alignment word symbols are $\{-\frac{\sqrt{2}}{2}-\frac{\sqrt{2}}{2}\mathrm{j},\ -\frac{\sqrt{2}}{2}+\frac{\sqrt{2}}{2}\mathrm{j},\ \frac{\sqrt{2}}{2}-\frac{\sqrt{2}}{2}\mathrm{j},\ \frac{\sqrt{2}}{2}+\frac{\sqrt{2}}{2}\mathrm{j}\}$ .

In addition, the two polarization directions are orthogonal to each other. To be specific, when one polarization direction is X polarization, the other polarization direction is Y polarization; or when one polarization direction is Y polarization, the other polarization direction is X polarization.

In one frame, a sequence including frame alignment word symbols in one polarization direction is different from a sequence including frame alignment word symbols in the other polarization direction, and a sequence including pilot symbols in one polarization direction is different from a sequence including pilot symbols in the other polarization direction. For example, if a sequence including frame alignment word symbols in one polarization direction is -A-Aj, - A-Aj, A+Aj, and A-Aj, a sequence including frame alignment word symbols in the other polarization direction cannot be the same as the sequence in a same order, and may be -A-Aj, - A-Aj, A+Aj, and A+Aj. There is one different symbol. This avoids a problem that the receiving device cannot distinguish between two polarization directions in actual transmission.

There may be generally two types of frame structures provided in this embodiment of this application. One type is that there is one symbol serving as both a frame alignment word symbol and a pilot symbol in a frame; and the other type is that there is no symbol serving as both a frame alignment word symbol and a pilot symbol in a frame. The two types of frame structures are separately described below.

1. One symbol serving as both a frame alignment word symbol and a pilot symbol in a frame

In this embodiment of this application, in a polarization direction, there is one symbol serving as both a frame alignment word symbol and a pilot symbol in the frame, $N_{FAW} + N_{RES} = M$, and $N_{FAW} + N_{PS}$ is an odd number.

For a frame structure in this case, refer to FIG. 6A for understanding. As shown in FIG. 6A, the frame includes $N_{PS}$ pilot symbols, $N_{FAW}$ frame alignment word symbols, $N_{RES}$ reserved symbols, and a plurality of symbols before framing, where the symbols before framing include information and parity symbols. There is one pilot symbol in every M symbols in the frame, where a 1st symbol in the first M symbols is both a frame alignment word symbol and a pilot symbol, and remaining symbols are a frame alignment word symbol and a reserved symbol. Certainly, alternatively, any one of the first $N_{FAW}$ symbols may be both a frame alignment word symbol and a pilot symbol. This is not limited in this application. In addition, a symbol at a fixed location in every M symbols is a pilot symbol, and is used for carrier phase recovery. After the $N_{FAW}$ frame alignment word symbol, there are usually $N_{RES}$ reserved symbols that may be reserved for other purposes in the future, for example, represent measured link end-to-end transmission delay data, where $N_{FAW} + N_{RES} = M$. A 1st symbol in the following every M symbols is a pilot symbol, and remaining (M-1) symbols are symbols before framing. It should be noted that in this application, neither a pilot symbol overlaps a reserved symbol nor a pilot symbol overlaps a symbol before framing. For example, there is no symbol that is both a pilot symbol and a symbol before framing.

In an embodiment in which the frame structure shown in FIG. 6A is used, in a polarization direction, a sum of quantities of frame alignment word symbols and pilot symbols included in one frame is ($N_{FAW} + N_{PS} - 1$), and is an even number. The sum is not ($N_{FAW} + N_{PS}$), because one symbol is both a frame alignment word symbol and a pilot symbol. Therefore, the sum is one less than a sum of the two types of symbols. In each polarization direction, a sum of real parts of complex numbers corresponding to ($N_{FAW} + N_{PS} - 1$) symbols including frame alignment word symbols and pilot symbols in one frame is 0, and a sum of imaginary parts is also 0. This can achieve direct current balance and help the receiving device restore signal quality.

In one DSP frame, consecutively arranged $N_{FAW}$ symbols are frame alignment word symbols, and may be used for frame alignment word and/or link training. In some application scenarios, an FAW frame alignment word sequence is also referred to as a training sequence (training sequence, TS). For FAW in other content in this application, refer to this part for understanding. Details are not described subsequently again.

Based on the frame structure shown in FIG. 6A, a frame may be divided into a plurality of symbol subsets starting from a 1st symbol, and each symbol subset includes M symbols. It should be understood that symbol division in the frame herein is merely a concept introduced for ease of description, and a frame may not be divided in an actual application. In each symbol subset including M symbols, one symbol is a pilot symbol. A symbol subset in the frame includes a pilot symbol, a frame alignment word symbol, and a reserved symbol. Another symbol subset includes a pilot symbol and a symbol before framing. It should be understood that, in the frame structure shown in FIG. 6A, a 1st symbol subset includes

pilot symbols, frame alignment word symbols, and reserved symbols. This is merely an example. Alternatively, the last symbol subset may include pilot symbols, frame alignment word symbols, and reserved symbols. This is not limited herein. For the frame structure shown in FIG. 6A, a symbol before framing does not exist in the 1st symbol subset. The frame structure facilitates hardware implementation, and may have characteristics of a low delay and low complexity. It should be understood that, based on the frame structure shown in FIG. 6A, one frame includes $M \times N_{PS}$ symbols, and a quantity of symbols before framing is $(M - 1) \times (N_{PS} - 1)$. A specific framing operation is as follows: The $(M - 1) \times (N_{PS} - 1)$ symbols before framing are divided into $(N_{PS} - 1)$ groups, where each group includes $(M - 1)$ symbols, and one pilot symbol is inserted before each group of $(M - 1)$ symbols to obtain $M \times (N_{PS} - 1)$ symbols; and $M$ symbols are inserted before or after $M \times (N_{PS} - 1)$ symbols, where the M symbols include $N_{FAW}$ frame alignment word symbols and $N_{RES}$ reserved symbols.

Another specific framing operation is as follows: $M$ symbols are inserted before or after the $(M - 1) \times (N_{PS} - 1)$ symbols before framing, where the $M$ symbols include $N_{FAW}$ frame alignment word symbols and $N_{RES}$ reserved symbols; and the $(M - 1) \times (N_{PS} - 1)$ symbols before framing are divided into $(N_{PS} - 1)$ groups, where each group includes $(M - 1)$ symbols, and one pilot symbol is inserted before the $(M - 1)$ symbols in each group. It may be understood that the frame structure shown in FIG. 6A is characterized by a low delay and low complexity.

2. There is no symbol serving as both a frame alignment word symbol and a pilot symbol in a frame.

In this embodiment of this application, in a polarization direction, there is no symbol serving as both a frame alignment word symbol and a pilot symbol in a frame, $N_{FAW} + N_{RES} + 1 = M$, and $N_{FAW} + N_{PS}$ is an even number.

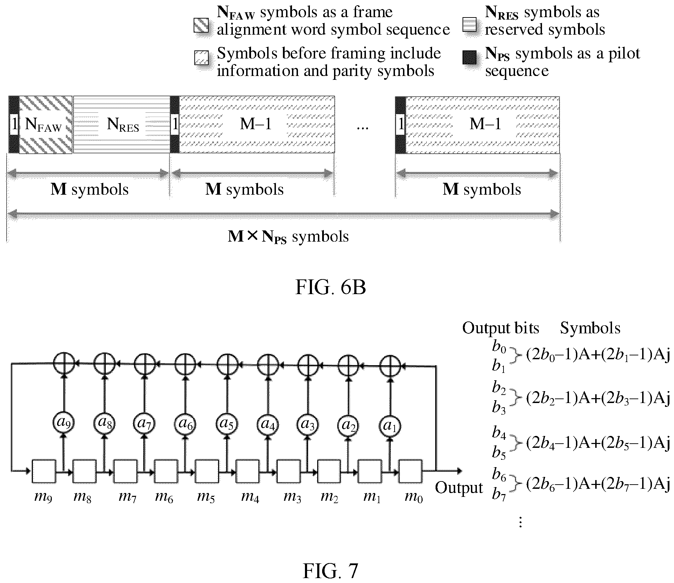

For a frame structure in this case, refer to FIG. 6B for understanding. As shown in FIG. 6B, the frame includes $N_{PS}$ pilot symbols, $N_{FAW}$ frame alignment word symbols, $N_{RES}$ reserved symbols, and a plurality of symbols before framing, where the symbols before framing include information and parity symbols. Different from the structure in FIG. 6A, there is one pilot symbol in every M symbols in the frame, where a 1st symbol in the first M symbols is a pilot symbol, but is not a frame alignment word symbol, and is followed by frame alignment word symbols and reserved symbols. Certainly, a location of the pilot symbol is not limited to ranking the first, or may be after the frame alignment word symbol or after the reserved symbol. This is not limited in this application.

In a polarization direction, a sum of quantities of frame alignment word symbols and pilot symbols included in one frame is $(N_{FAW} + N_{PS})$, and is an even number. In each polarization direction, a sum of real parts of complex numbers corresponding to $(N_{FAW} + N_{PS})$ symbols including frame alignment word symbols and pilot symbols in one frame is 0, and a sum of imaginary parts is also 0. This can achieve direct current balance and help the receiving device restore signal quality.

Based on the frame structure shown in FIG. 6B, a frame may be divided into a plurality of symbol subsets starting from a 1st symbol, and each symbol subset includes M symbols. It should be understood that symbol division in the frame herein is merely a concept introduced for ease of description, and a frame may not be divided in an actual application. In each symbol subset including M symbols, one symbol is a pilot symbol. A symbol subset in the frame includes a pilot symbol, a frame alignment word symbol, and a reserved symbol. Another symbol subset includes a pilot symbol and a symbol before framing. It should be understood that, in the frame structure shown in FIG. 6B, a 1st symbol subset includes pilot symbols, frame alignment word symbols, and reserved symbols. This is merely an example. Alternatively, the last symbol subset may include pilot symbols, frame alignment word symbols, and reserved symbols. This is not limited herein. For the frame structure shown in FIG. 6B, a symbol before framing does not exist in the 1st symbol subset. This facilitates hardware implementation, and may have characteristics of a low delay and low complexity. It should be understood that, based on the frame structure shown in FIG. 6B, one frame includes $M \times N_{PS}$ symbols, and a quantity of symbols before framing is $(M - 1) \times (N_{PS} - 1)$. A specific DSP framing operation is as follows: $(M - 1)$ symbols, including $N_{FAW}$ frame alignment word symbols and $N_{RES}$ reserved symbols, are inserted before or after the $(M - 1) \times (N_{PS} - 1)$ symbols before framing, to obtain a total of $(M - 1) \times N_{PS}$ symbols; and the $(M - 1) \times N_{PS}$ symbols before framing are divided into $N_{PS}$ groups, where each group includes $(M - 1)$ symbols, and one pilot symbol is inserted before the $(M - 1)$ symbols in each group. It may be understood that the frame structure shown in FIG. 6B is characterized by a low delay and low complexity.

The pilot symbol described above is generated by using a target polynomial and a seed. In this embodiment of this application, a 10-order polynomial is used as the target polynomial, and the 10-order polynomial may be expressed as:

$$x^{10} + a_9 \times x^9 + a_8 \times x^8 + a_7 \times x^7 + a_6 \times x^6 + a_5 \times x^5 + a_4 \times x^4 + a_3 \times x^3 + a_2 \times x^2 + a_1 \times x + 1,$$

where a value of $a_9 \ldots a_1$ may be 0 or 1.

For a pilot symbol generation structure, refer to FIG. 7 for understanding. As shown in FIG. 7, the seed may be represented as $m_9$, $m_8$, $m_7$, $m_6$, $m_5$, $m_4$, $m_3$, $m_2$, $m_1$, and $m_0$ in a binary form. Certainly, the seed may alternatively be represented in a hexadecimal or decimal form, and needs to be converted into the binary form during an operation with the target polynomial. For example: 0110111000 is represented as Ox1B8 in the hexadecimal form and represented as 440 in the decimal form.

In this embodiment of this application, a same target generator polynomial may be used for pilot symbols in two orthogonal polarization directions. However, because seeds (seeds) are different, correspondingly, pilot symbols output in the two polarization directions are not completely the same.

As shown in FIG. 7, for a scenario in which $N_{PS}$ pilot symbols need to be generated, a bit sequence $b_0, b_1, b_2, ...$ $b_{2N_{PS}-1}$ with a continuous length of $2N_{PS}$ is obtained based on a target polynomial and a seed. Every two consecutive bits in the bit sequence $b_0, b_1, b_2, ... b_{2N_{PS}-1}$ are mapped to one symbol, where $b_{2t}$ and $b_{2t+1}$ are mapped to one symbol $(2b_{2t} - 1)A + (2b_{2t+1} - 1)Aj$, where $0 \leq t < N_{PS}$.

In this embodiment of this application, the target polynomial and the seed may be determined by designing values of coefficients $a_9 ... a_1$ in the polynomial, so that an autocorrelation characteristic of symbol sequences on the X polarization and the Y polarization is good for a generated pilot symbol, and a cross-correlation characteristic of the symbol sequences on the two polarizations is good. Generally, the target polynomial may be one of the following target polynomials in Table 0:

**Table 0**

| Index | Target polynomial |
|---|---|
| 1 | $x^{10} + x^9 + x^8 + x^6 + x^5 + x^4 + x^3 + x^2 + 1$ |
| 2 | $x^{10} + x^8 + x^7 + x^6 + x^5 + x^4 + x^2 + x^1 + 1$ |
| 3 | $x^{10} + x^9 + x^8 + x^5 + 1$ |
| 4 | $x^{10} + x^9 + x^5 + x^2 + 1$ |
| 5 | $x^{10} + x^9 + x^8 + x^4 + x^3 + x^2 + 1$ |
| 6 | $x^{10} + x^9 + x^8 + x^6 + x^5 + x^4 + x^3 + x^2 + 1$ |
| 7 | $x^{10} + x^9 + x^4 + x^1 + 1$ |
| 8 | $x^{10} + x^9 + x^8 + x^7 + x^4 + x^1 + 1$ |
| 9 | $x^{10} + x^9 + x^8 + x^7 + x^6 + X^5 + x^4 + x^1 + 1$ |
| 10 | $x^{10} + x^8 + x^7 + x^3 + x^2 + x^1 + 1$ |
| 11 | $x^{10} + x^9 + x^6 + x^3 + x^2 + x^1 + 1$ |
| 12 | $x^{10} + x^9 + x^6 + x^5 + x^4 + x^3 + x^2 + x^1 + 1$ |
| 13 | $x^{10} + x^9 + x^6 + x^5 + x^4 + x^3 + x^2 + x^1 + 1$ |
| 14 | $x^{10} + x^7 + x^3 + x + 1$ |
| 15 | $x^{10} + x^9 + x^8 + x^6 + x^2 + x^1 + 1$ |
| 16 | $x^{10} + x^9 + x^8 + x^4 + x^2 + x^1 + 1$ |
| 17 | $x^{10} + x^9 + x^8 + x^7 + x^5 + x^4 + 1$ |
| 18 | $x^{10} + x^9 + x^4 + x^2 + 1$ |
| 19 | $x^{10} + x^9 + x^7 + x^6 + x^5 + x^4 + x^3 + x^2 + 1$ |
| 20 | $x^{10} + x^8 + x^6 + x^1 + 1$ |
| 21 | $x^{10} + x^8 + x^7 + x^6 + x^5 + x^4 + x^3 + x^1 + 1$ |
| 22 | $x^{10} + x^9 + x^8 + x^6 + x^2 + x^1 + 1$ |
| 23 | $x^{10} + x^9 + x^8 + x^4 + x^2 + x^1 + 1$ |
| 24 | $x^{10} + x^6 + x^5 + x^3 + x^2 + x^1 + 1$ |
| 25 | $x^{10} + x^8 + x^4 + x^3 + 1$ |

Particularly, the target polynomial is $x^{10} + x^7 + x^3 + x + 1$ or $x^{10} + x^8 + x^4 + x^3 + 1$.

In addition, by selecting an appropriate target polynomial and seed, in the solution shown in FIG. 6A, the ($N_{FAW} + N_{PS} - 1$) symbols including the $N_{FAW}$ frame alignment word symbols and the $N_{PS}$ pilot symbols can achieve direct current balance, to help the receiving device restore signal quality.

In the solution shown in FIG. 6A in the embodiment of this application, in each polarization direction, one frame includes a total of ($N_{FAW} + N_{PS} - 1$) frame alignment word symbols and pilot symbols, and a difference between quantities of -A-Aj, -A+Aj, A-Aj, and A+Aj in these symbols is not greater than 1. In addition, in one frame, quantities of four complex numbers representing frame alignment word symbols and pilot symbols in the two polarization directions are the same, that is, $(N_{FAW} + N_{PS} - 1)/2$. This effectively ensures balance between the symbol quantities. In addition, a sequence including the frame alignment word symbols and the pilot symbols may further achieve direct current balance, so that the receiving device can restore signal quality. A specific example is as follows: In frame alignment word symbols and pilot symbols included in each frame, quantities of -A-Aj, -A+Aj, A-Aj, and A+Aj in one polarization direction are respectively

$$\lfloor (N_{FAW} + N_{PS} - 1)/4 \rfloor, \quad (N_{FAW} + N_{PS} - 1)/2 - \lfloor (N_{FAW} + N_{PS} - 1)/4 \rfloor,$$

$$(N_{FAW} + N_{PS} - 1)/2 - \lfloor (N_{FAW} + N_{PS} - 1)/4 \rfloor, \text{ and } \lfloor (N_{FAW} + N_{PS} - 1)/4 \rfloor$$; and quantities in the other polarization direction are respectively

$$(N_{FAW} + N_{PS} - 1)/2 - \lfloor (N_{FAW} + N_{PS} - 1)/4 \rfloor, \lfloor (N_{FAW} + N_{PS} - 1)/4 \rfloor, \lfloor (N_{FAW} + N_{PS} - 1)/4 \rfloor, \text{ and }$$

$$(N_{FAW} + N_{PS} - 1)/2 - \lfloor (N_{FAW} + N_{PS} - 1)/4 \rfloor$$, where $\lfloor a \rfloor$ represents a floor operation on a positive real number a.

In addition, in the solution shown in FIG. 6B, the $(N_{FAW} + N_{PS})$ symbols including the $N_{FAW}$ frame alignment word symbols and the $N_{PS}$ pilot symbols achieve direct current balance, to help the receiving device restore signal quality.

In the solution shown in FIG. 6B in the embodiment of this application, in each polarization direction, one frame includes a total of $(N_{FAW} + N_{PS})$ frame alignment word symbols and pilot symbols, and a difference between quantities of -A-Aj, -A+Aj, A-Aj, and A+Aj in these symbols is not greater than 1. In addition, in one frame, quantities of four complex numbers representing frame alignment word symbols and pilot symbols in the two polarization directions are the same, that is, $(N_{FAW} + N_{PS})/2$. This effectively ensures balance between the symbol quantities. In addition, a sequence including the frame alignment word symbols and the pilot symbols may further achieve direct current balance, so that the receiving device can restore signal quality. A specific example is as follows: In frame alignment word symbols and pilot symbols included in each frame, quantities of -A-Aj, -A+Aj, A-Aj, and A+Aj in one polarization direction are respectively

$$\lfloor (N_{FAW} + N_{PS})/4 \rfloor, \quad (N_{FAW} + N_{PS})/2 - \lfloor (N_{FAW} + N_{PS})/4 \rfloor, (N_{FAW} + N_{PS})/2 - \lfloor (N_{FAW} + N_{PS})/4 \rfloor, \text{ and }$$

$$\lfloor (N_{FAW} + N_{PS})/4 \rfloor$$; and quantities in the other polarization direction are respectively

$$(N_{FAW} + N_{PS})/2 - \lfloor (N_{FAW} + N_{PS})/4 \rfloor, \lfloor (N_{FAW} + N_{PS})/4 \rfloor, \lfloor (N_{FAW} + N_{PS})/4 \rfloor, \text{ and }$$

$$(N_{FAW} + N_{PS})/2 - \lfloor (N_{FAW} + N_{PS})/4 \rfloor$$, where $\lfloor a \rfloor$ represents a floor operation on a positive real number a.

The foregoing FIG. 6A and FIG. 6B describe frames of two different structures. To better understand the solutions of this application, the following describes pilot symbol generation processes in different frame structures with reference to specific examples.

In a polarization direction, a quantity of symbols before framing is 6048, and the following Table 1 lists parameters such as $N_{PS}$, $N_F$, $N_{FAW}$, $N_{RES}$, OH, and M corresponding to a frame structure:

**Table 1**

| $N_{PS}$ | $N_F$ | $N_{FAW}$ | $N_{RES}$ | M | OH |
|---|---|---|---|---|---|
| 97 | 6208 | 22 | 42 | 64 | 2.65% |

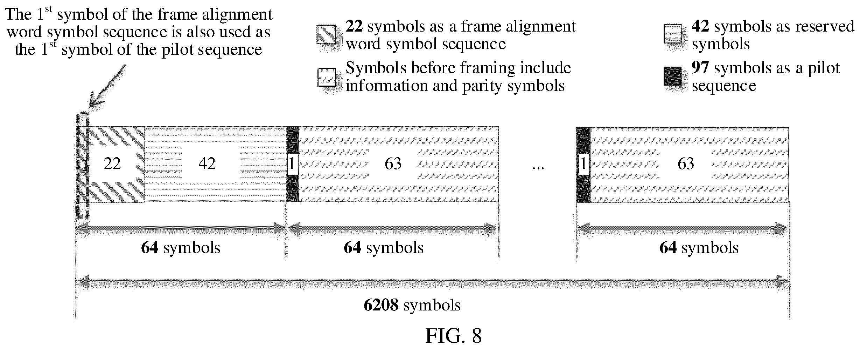

For understanding of the frame structure, refer to FIG. 8. The frame includes 6208 symbols, and there is one pilot symbol in every 64 symbols, where the first 22 symbols of the first 64 symbols are frame alignment word symbols, the 1st frame alignment word symbol is also a pilot symbol, and the following 42 symbols are reserved symbols, that is, $N_{FAW} + N_{RES}$=22+42=64. The 1st symbol in the following every 64 symbols is a pilot symbol, 6208/64=97, and there are 97 pilot symbols. Frame redundancy of this structure is 2.65%.

The 22 frame alignment word symbols may be understood with reference to the following Table 2:

**Table 2**

| Polarization | Sequence of the frame alignment word symbols |
|---|---|
| Polarization 1 | A-Aj, A+Aj, A+Aj, A+Aj, A-Aj, A-Aj, -A-Aj, A+Aj, -A-Aj, -A+Aj, - A+Aj, A-Aj, -A-Aj, -A-Aj, -A+Aj, A+Aj, -A-Aj, A-Aj, -A+Aj, A+Aj, - A-Aj, -A+Aj |
| Polarization 2 | A+Aj, -A+Aj, -A-Aj, -A+Aj, A-Aj, A+Aj, A-Aj, A-Aj, -A-Aj, A-Aj, A+Aj, -A+Aj, -A+Aj, A+Aj, -A-Aj, A+Aj, -A-Aj, -A+Aj, A-Aj, -A-Aj, A-Aj, -A+Aj |

The 97 pilot symbols are determined based on a target polynomial and a corresponding seed (seed). In this embodiment of this application, a structure of pilot symbol generation using the target polynomial and the seed may be understood with reference to FIG. 7.

For a scenario in which 97 pilot symbols are to be generated, a bit sequence $b_0, b_1, b_2, \ldots b_{193}$ is obtained based on the target polynomial and the seed. Every two consecutive bits in the bit sequence $b_0, b_1, b_2, \ldots b_{193}$ are mapped to one symbol, where $b_{2t}$ and $b_{2t+1}$ are mapped to one symbol $(2b_{2t} - 1)A + (2b_{2t+1} - 1)Aj$. It should be noted that the symbol $(2b_{2t} - 1)A + (2b_{2t+1} - 1)Aj$ may alternatively not be a symbol in a constellation diagram of a used modulation format, and may be four symbols in a middle area of the outermost four symbols and the innermost four symbols in the constellation diagram of the used modulation format.

When the target polynomial and hexadecimal seeds in the two polarization directions are one row in the following table 3, a normalized amplitude of a sidelobe value of a periodic autocorrelation function of pilot symbols in a same polarization direction is not greater than 0.25, and a normalized amplitude of a periodic cross-correlation function value of pilot symbols in different polarization directions is not greater than 0.25.

**Table 3**

| Index | Target polynomial | Seed in a polarization direction 1 | Seed in a polarization direction 2 |
|---|---|---|---|
| 1 | $x^{10} + x^9 + x^8 + x^6 + x^5 + x^4 + x^3 + x^2 + 1$ | 0x255 | 0x307 |
| 2 | $x^{10} + x^8 + x^7 + x^6 + x^5 + x^4 + x^2 + x^1 + 1$ | 0x005 | 0x13B |
| 3 | $x^{10} + x^8 + x^7 + x^6 + x^5 + x^4 + x^2 + x^1 + 1$ | 0x005 | 0x277 |
| 4 | $x^{10} + x^9 + x^8 + x^5 + 1$ | 0x291 | 0x137 |
| 5 | $x^{10} + x^9 + x^5 + x^2 + 1$ | 0x0E9 | 0x303 |
| 6 | $x^{10} + x^9 + x^5 + x^2 + 1$ | 0x0E9 | 0x03B |
| 7 | $x^{10} + x^9 + x^5 + x^2 + 1$ | 0x0E9 | 0x207 |
| 8 | $x^{10} + x^9 + x^8 + x^4 + x^3 + x^2 + 1$ | 0x18D | 0x15F |
| 9 | $x^{10} + x^9 + x^8 + x^4 + x^3 + x^2 + 1$ | 0x35D | 0x15F |
| 10 | $x^{10} + x^9 + x^8 + x^6 + x^5 + x^4 + x^3 + x^2 + 1$ | 0x255 | 0x183 |
| 11 | $x^{10} + x^9 + x^4 + x^1 + 1$ | 0x0A9 | 0x143 |
| 12 | $x^{10} + x^9 + x^8 + x^7 + x^4 + x^1 + 1$ | 0x361 | 0x367 |
| 13 | $x^{10} + x^9 + x^8 + x^7 + x^4 + x^1 + 1$ | 0x361 | 0x1FF |
| 14 | $x^{10} + x^9 + x^8 + x^7 + x^4 + x^1 + 1$ | 0x361 | 0x3FF |
| 15 | $x^{10} + x^9 + x^8 + x^7 + x^4 + x^1 + 1$ | 0x339 | 0x1FF |
| 16 | $x^{10} + x^9 + x^8 + x^7 + x^4 + x^1 + 1$ | 0x339 | 0x3FF |
| 17 | $x^{10} + x^9 + x^8 + x^7 + x^4 + x^1 + 1$ | 0x205 | 0x203 |
| 18 | $x^{10} + x^9 + x^8 + x^7 + x^4 + x^1 + 1$ | 0x205 | 0x1FF |
| 19 | $x^{10} + x^9 + x^8 + x^7 + x^4 + x^1 + 1$ | 0x205 | 0x3FF |
| 20 | $x^{10} + x^9 + x^8 + x^7 + x^4 + x^1 + 1$ | 0x365 | 0x203 |
| 21 | $x^{10} + x^9 + x^8 + x^7 + x^4 + x^1 + 1$ | 0x3FD | 0x367 |
| 22 | $x^{10} + x^9 + x^8 + x^7 + x^6 + x^5 + x^4 + x^1 + 1$ | 0x091 | 0x25B |
| 23 | $x^{10} + x^9 + x^8 + x^7 + x^6 + x^5 + x^4 + x^1 + 1$ | 0x091 | 0x0B7 |
| 24 | $x^{10} + x^8 + x^7 + x^3 + x^2 + x^1 + 1$ | 0x359 | 0x083 |
| 25 | $x^{10} + x^8 + x^7 + x^3 + x^2 + x^1 + 1$ | 0x3B5 | 0x083 |
| 26 | $x^{10} + x^9 + x^6 + x^3 + x^2 + x^1 + 1$ | 0x389 | 0x103 |
| 27 | $x^{10} + x^9 + x^6 + x^3 + x^2 + x^1 + 1$ | 0x389 | 0x38B |
| 28 | $x^{10} + x^9 + x^6 + x^3 + x^2 + x^1 + 1$ | 0x389 | 0x207 |
| 29 | $x^{10} + x^9 + x^6 + x^3 + x^2 + x^1 + 1$ | 0x389 | 0x18F |

(continued)

| Index | Target polynomial | Seed in a polarization direction 1 | Seed in a polarization direction 2 |
|---|---|---|---|
| 30 | $x^{10} + x^9 + x^6 + x^3 + x^2 + x^1 + 1$ | 0x099 | 0x103 |
| 31 | $x^{10} + x^9 + x^6 + x^3 + x^2 + x^1 + 1$ | 0x099 | 0x38B |
| 32 | $x^{10} + x^9 + x^6 + x^3 + x^2 + x^1 + 1$ | 0x099 | 0x207 |
| 33 | $x^{10} + x^9 + x^6 + x^3 + x^2 + x^1 + 1$ | 0x099 | 0x18F |
| 34 | $x^{10} + x^9 + x^6 + x^3 + x^2 + x^1 + 1$ | 0x199 | 0x103 |
| 35 | $x^{10} + x^9 + x^6 + x^3 + x^2 + x^1 + 1$ | 0x199 | 0x38B |
| 36 | $x^{10} + x^9 + x^6 + x^3 + x^2 + x^1 + 1$ | 0x199 | 0x207 |
| 37 | $x^{10} + x^9 + x^6 + x^3 + x^2 + x^1 + 1$ | 0x199 | 0x18F |
| 38 | $x^{10} + x^9 + x^6 + x^3 + x^2 + x^1 + 1$ | 0x09D | 0x103 |
| 39 | $x^{10} + x^9 + x^6 + x^3 + x^2 + x^1 + 1$ | 0x09D | 0x38B |
| 40 | $x^{10} + x^9 + x^6 + x^3 + x^2 + x^1 + 1$ | 0x09D | 0x207 |
| 41 | $x^{10} + x^9 + x^6 + x^3 + x^2 + x^1 + 1$ | 0x09D | 0x18F |
| 42 | $x^{10} + x^9 + x^6 + x^5 + x^4 + x^3 + x^2 + x^1 + 1$ | 0x0D9 | 0x19F |
| 43 | $x^{10} + x^9 + x^6 + x^5 + x^4 + x^3 + x^2 + x^1 + 1$ | 0x00D | 0x19F |

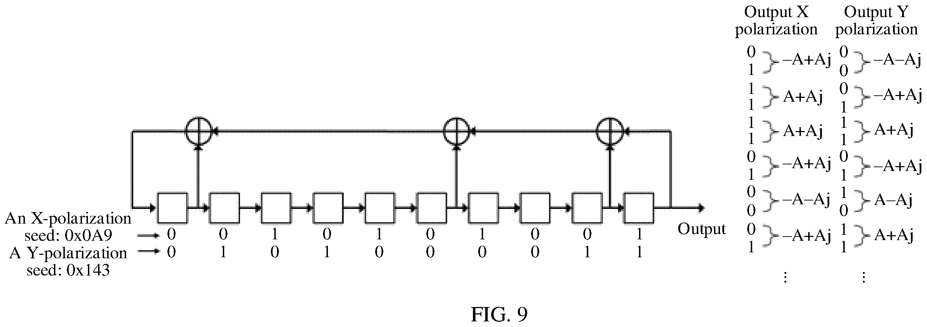

When the target polynomial is $x^{10} + x^9 + x^4 + x^1 + 1$, and the corresponding hexadecimal seeds represented in the two polarization directions are 0x0A9 and Ox143, namely, one row whose sequence number is 11 in Table 2, a process of generating the 97 pilot symbols may be understood with reference to FIG. 9.

As shown in FIG. 9, in the direction of polarization 1, an input polarization seed is 0x0A9, which is 0010101001 after being converted into a binary sequence, namely, values of $m_9$ to $m_0$. If two bits 1 and 0 are continuously output in sequence, the pilot symbol in the X polarization direction is A-Aj. If two bits 0 and 0 are continuously output in sequence, the pilot symbol in the X polarization direction is -A-Aj. If two bits 1 and 1 are continuously output in sequence, the pilot symbol in the X polarization direction is A+Aj. If two bits 0 and 1 are continuously output in sequence, the pilot symbol in the X polarization direction is -A+Aj. By analogy, 97 pilot symbols in the X polarization direction may be obtained.

As shown in FIG. 9, in the direction of polarization 2, an input polarization seed is Ox143, which is 0101000011 after being converted into a binary sequence, namely, values of $m_9$ to $m_0$. If two bits 1 and 0 are continuously output in sequence, the pilot symbol in the Y polarization direction is A-Aj. If two bits 0 and 0 are continuously output in sequence, the pilot symbol in the Y polarization direction is -A-Aj. If two bits 1 and 1 are continuously output in sequence, the pilot symbol in the Y polarization direction is A+Aj. If two bits 0 and 1 are continuously output in sequence, the pilot symbol in the Y polarization direction is -A+Aj. By analogy, 97 pilot symbols in the Y polarization direction may be obtained.

Therefore, 97 pilot symbols shown in the following Table 4 may be obtained.

**Table 4**

| Polarization direction | Pilot symbols |
|---|---|
| Polarization 1 | A-Aj, -A+Aj, -A+Aj, -A+Aj, -A-Aj, A-Aj, A+Aj, -A+Aj, A-Aj, A+Aj, - A-Aj, A-Aj, -A+Aj, -A+Aj, -A+Aj, A+Aj, -A+Aj, -A-Aj, -A-Aj, A-Aj, - A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, - A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, - A-Aj, A-Aj, A+Aj, A+Aj, -A-Aj, A+Aj, A+Aj, A+Aj, -A-Aj, A+Aj, - A+Aj, A+Aj, -A-Aj, -A-Aj, A+Aj, -A-Aj, -A+Aj, -A+Aj, A-Aj, -A-Aj, - A+Aj, A-Aj, A+Aj, -A+Aj, -A-Aj, -A+Aj |

(continued)

| Polarization direction | Pilot symbols |
|---|---|
| Polarization 2 | A+Aj, -A-Aj, -A-Aj, A-Aj, A-Aj, -A+Aj, -A-Aj, A-Aj, A+Aj, -A-Aj, - A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, A+Aj, -A-Aj, A-Aj, -A-Aj, -A-Aj, A-Aj, - A+Aj, -A-Aj, A+Aj, A+Aj, -A-Aj, -A-Aj, A+Aj, A+Aj, A-Aj, A-Aj, A+Aj, -A-Aj, A+Aj, A+Aj, -A+Aj, -A-Aj, A+Aj, A-Aj, -A+Aj, A+Aj, - A+Aj, A-Aj, -A+Aj, -A+Aj, -A+Aj, -A+Aj, -A+Aj, -A-Aj, A+Aj, -A-Aj, A-Aj, -A-Aj, -A+Aj, -A+Aj, A-Aj, A-Aj |

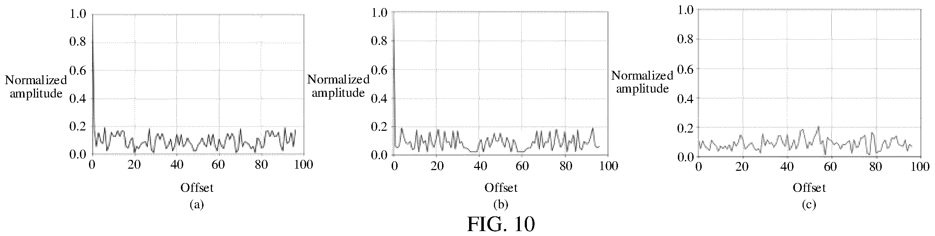

A correlation characteristic corresponding to pilot symbols is shown in FIG. 10. (a) in FIG. 10 shows a periodic autocorrelation result of a sequence of pilot symbols in an X polarization direction, (b) in FIG. 10 shows a periodic autocorrelation result of a sequence of pilot symbols in a Y polarization direction, and (c) in FIG. 10 shows a periodic cross-correlation result of a sequence of pilot symbols in X and Y polarization directions. A normalized amplitude of a sidelobe value of a periodic autocorrelation function of a symbol sequence in the two polarization directions is not greater than 0.190, and a normalized amplitude of a sidelobe value of a periodic cross-correlation function of the symbol sequence in the two polarization directions is not greater than 0.206.

Based on received signals in the two polarization directions, the receiving device performs DSP to restore the signals by using an FAW frame alignment word sequence and a PS pilot sequence. For example, by separately calculating correlation values between the received signals and sequence symbols of the frame alignment word sequence on the X polarization and the Y polarization, polarization directions may be distinguished, and frame alignment word alignment may be performed; and carrier phase recovery is performed by using the PS pilot signal.

The designed sequence of pilot symbols has good autocorrelation and cross-correlation characteristics, and the frame alignment word sequence and the pilot symbol sequence are combined to achieve direct current balance. This helps the receiving device improve quality of the restored signal.

The foregoing describes an example of the frame structure with reference to FIG. 6A, and the following describes an example of a frame structure with reference to FIG. 6B.

A quantity of symbols before framing in the frame structure is 8064, and the following Table 5 lists parameters such as $N_{PS}$, $N_F$, $N_{FAW}$, $N_{RES}$, OH, and M corresponding to the frame structure:

**Table 5**

| $N_{PS}$ | $N_F$ | $N_{FAW}$ | $N_{RES}$ | M | OH |
|---|---|---|---|---|---|
| 129 | 8256 | 11 | 52 | 64 | 2.38% |

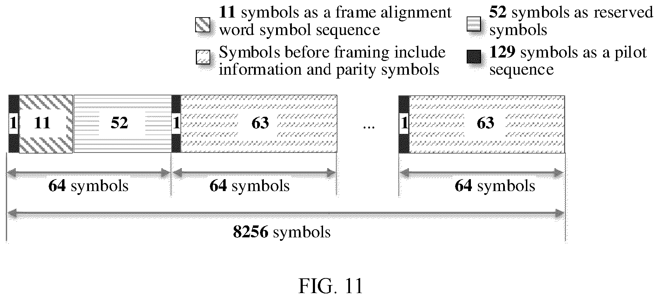

The frame structure may be understood with reference to FIG. 11. The frame includes 8256 symbols, there is one pilot symbol in every 64 symbols, where the 1st symbol in the first 64 symbols is a pilot symbol, followed by 11 frame alignment word symbols, and then 52 reserved symbols, that is, $N_{FAW}+N_{RES}+1=11+52+1=64$. The 1st symbol in the following every 64 symbols is a pilot symbol, 8256/64=129, and there are 129 pilot symbols. Frame redundancy of this structure is 2.38%.

The 11 frame alignment word symbols may be understood with reference to the following Table 6:

**Table 6**

| Polarization | Sequence of the frame alignment word symbols |
|---|---|
| Polarization 1 | -A+Aj, A+Aj, -A+Aj, A+Aj, -A-Aj, A+Aj, -A-Aj, -A-Aj, A+Aj, A-Aj, A-Aj |
| Polarization 2 | -A-Aj, -A-Aj, A-Aj, -A+Aj, -A+Aj, A+Aj, -A-Aj, -A+Aj, A-Aj, A+Aj, A-Aj |

The 129 pilot symbols are determined based on a target polynomial and a corresponding seed (seed). When the target polynomial and hexadecimal seeds in the two polarization directions are one row in the following table 7, a normalized amplitude of a sidelobe value of a periodic autocorrelation function of pilot symbols in a same polarization direction is not greater than 0.21, and a normalized amplitude of a periodic cross-correlation function value of pilot symbols in different polarization directions is not greater than 0.21.

**Table 7**

| Index | Target polynomial | Seed in one polarization direction | Seed in the other polarization direction |
|---|---|---|---|
| 1 | $x^{10} + x^7 + x^3 + x + 1$ | 0x30C | 0x38F |
| 2 | $x^{10} + x^7 + x^3 + x + 1$ | 0x05C | 0x38F |
| 3 | $x^{10} + x^7 + x^3 + x + 1$ | 0x1C3 | 0x38F |
| 4 | $x^{10} + x^7 + x^3 + x + 1$ | 0x2E3 | 0x196 |
| 5 | $x^{10} + x^9 + x^8 + x^6 + x^2 + x^1 + 1$ | 0x2A3 | 0x22A |
| 6 | $x^{10} + x^9 + x^8 + x^4 + x^2 + x^1 + 1$ | 0x062 | 0x370 |
| 7 | $x^{10} + x^9 + x^8 + x^7 + x^5 + x^4 + 1$ | 0x1BB | 0x311 |
| 8 | $x^{10} + x^9 + x^4 + x^2 + 1$ | 0x3B2 | 0x11F |
| 9 | $x^{10} + x^9 + x^4 + x^2 + 1$ | 0x2CA | 0x11F |
| 10 | $x^{10} + x^9 + x^4 + x^2 + 1$ | 0x365 | 0x2F3 |
| 11 | $x^{10} + x^9 + x^4 + x^2 + 1$ | 0x083 | 0x2F3 |
| 12 | $x^{10} + x^9 + x^7 + x^6 + x^5 + x^4 + x^3 + x^2 + 1$ | 0x016 | 0x283 |
| 13 | $x^{10} + x^9 + x^7 + x^6 + x^5 + x^4 + x^3 + x^2 + 1$ | 0x05B | 0x283 |
| 14 | $x^{10} + x^8 + x^6 + x^1 + 1$ | 0x190 | 0x1FA |
| 15 | $x^{10} + x^8 + x^6 + x^1 + 1$ | 0x37B | 0x1FA |
| 16 | $x^{10} + x^8 + x^6 + x^1 + 1$ | 0x2C8 | 0x150 |
| 17 | $x^{10} + x^8 + x^6 + x^1 + 1$ | 0x321 | 0x150 |
| 18 | $x^{10} + x^8 + x^7 + x^6 + x^5 + x^4 + x^3 + x^1 + 1$ | 0x1D5 | 0x317 |
| 19 | $x^{10} + x^8 + x^7 + x^6 + x^5 + x^4 + x^3 + x^1 + 1$ | 0x357 | 0x317 |
| 20 | $x^{10} + x^9 + x^8 + x^6 + x^2 + x^1 + 1$ | 0x320 | 0x3C7 |
| 21 | $x^{10} + x^9 + x^8 + x^6 + x^2 + x^1 + 1$ | 0x351 | 0x115 |
| 22 | $x^{10} + x^9 + x^8 + x^6 + x^2 + x^1 + 1$ | 0x2A3 | 0x2C8 |
| 23 | $x^{10} + x^9 + x^8 + x^6 + x^2 + x^1 + 1$ | 0x2A3 | 0x164 |
| 24 | $x^{10} + x^9 + x^8 + x^6 + x^2 + x^1 + 1$ | 0x2A3 | 0x115 |
| 25 | $x^{10} + x^9 + x^8 + x^4 + x^2 + x^1 + 1$ | 0x062 | 0x2E0 |
| 26 | $x^{10} + x^9 + x^8 + x^4 + x^2 + x^1 + 1$ | 0x062 | 0x3DE |
| 27 | $x^{10} + x^9 + x^8 + x^4 + x^2 + x^1 + 1$ | 0x062 | 0x3EF |
| 28 | $x^{10} + x^9 + x^8 + x^4 + x^2 + x^1 + 1$ | 0x0C5 | 0x2E0 |
| 29 | $x^{10} + x^9 + x^8 + x^4 + x^2 + x^1 + 1$ | 0x1FB | 0x3BC |
| 30 | $x^{10} + x^6 + x^5 + x^3 + x^2 + x^1 + 1$ | 0x26B | 0x25D |

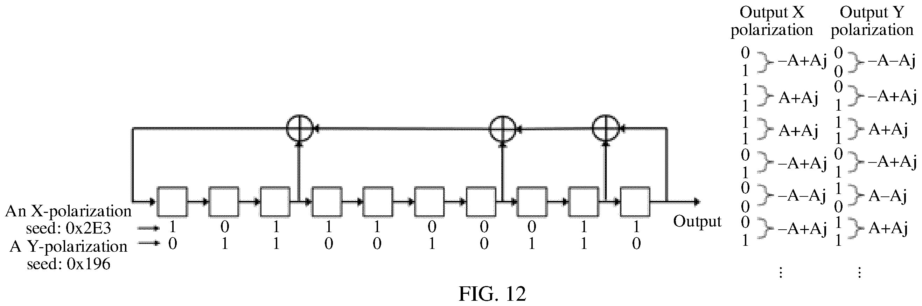

When the target polynomial is $x^{10}+x^7+x^3+x+1$, and the corresponding hexadecimal seeds in the two polarization directions are 0x2E3 and Ox196, namely, one row whose sequence number is 4 in Table 4, a process of generating the 129 pilot symbols may be understood with reference to FIG. 12. 129 pilot symbols shown in the following Table 8 may be obtained.

**Table 8**

| Polarization direction | Pilot symbols |
|---|---|
| Polarization 1 | A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, - A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, - A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, - A+Aj, -A-Aj, A-Aj, -A-Aj, A+Aj, A+Aj, A-Aj, -A-Aj, A-Aj, A-Aj, - A+Aj, A+Aj, A+Aj, -A-Aj, A+Aj, -A-Aj, -A-Aj |
| Polarization 2 | -A+Aj, A-Aj, A-Aj, -A+Aj, A-Aj, -A-Aj, A+Aj, -A-Aj, -A-Aj, A+Aj, A-Aj, A-Aj, -A-Aj, A-Aj, -A-Aj, A+Aj, A-Aj, A-Aj, A-Aj, A+Aj, -A-Aj, - A-Aj, A-Aj, -A-Aj, -A+Aj, -A+Aj, A+Aj, -A+Aj, -A-Aj, A-Aj, -A+Aj, A+Aj, -A+Aj, A+Aj, A-Aj, A+Aj, A+Aj, A-Aj, A-Aj, -A+Aj, A+Aj, A-Aj, -A-Aj, -A+Aj, -A+Aj, A-Aj, -A+Aj, A-Aj, A+Aj, A+Aj, A-Aj, -A-Aj, - A-Aj, A+Aj, -A+Aj, -A-Aj, A+Aj, A-Aj, -A-Aj, A-Aj, A+Aj, -A+Aj, - A+Aj, A-Aj, A-Aj, A-Aj, -A+Aj, A+Aj, -A+Aj, -A+Aj, A+Aj, A+Aj, -A-Aj, A-Aj, -A-Aj, A-Aj, -A+Aj, -A+Aj, -A+Aj, A+Aj, A+Aj, A-Aj, A+Aj, -A-Aj, -A+Aj, -A+Aj, A+Aj, A-Aj, -A+Aj, -A-Aj, A+Aj, -A+Aj, A-Aj, - A+Aj, A+Aj, -A+Aj, -A-Aj, A+Aj, -A+Aj, -A+Aj, -A-Aj, -A+Aj, A+Aj, A-Aj, -A-Aj, A+Aj, -A-Aj, A-Aj, A-Aj, A-Aj, -A+Aj, -A-Aj, -A-Aj, A+Aj, -A+Aj, -A+Aj, A+Aj, -A-Aj, -A+Aj, -A-Aj, A-Aj, -A-Aj, A-Aj, A+Aj, -A-Aj, -A+Aj, -A-Aj, A+Aj, -A-Aj |

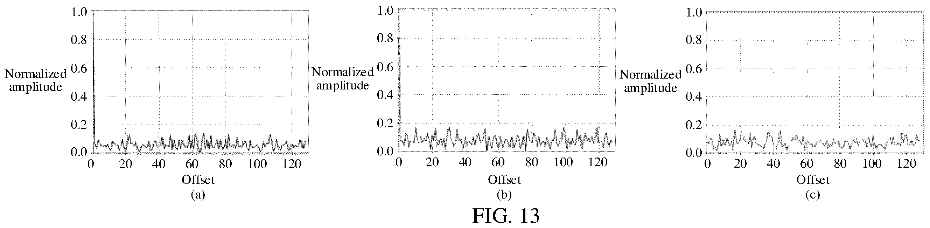

A correlation characteristic corresponding to pilot symbols is shown in FIG. 13. (a) in FIG. 13 shows a periodic autocorrelation result of a sequence of pilot symbols in an X polarization direction, (b) in FIG. 13 shows a periodic autocorrelation result of a sequence of pilot symbols in a Y polarization direction, and (c) in FIG. 13 shows a periodic cross-correlation result of a sequence of pilot symbols in X and Y polarization directions. A normalized amplitude of a sidelobe value of a periodic autocorrelation function of the symbol sequence in the two polarization directions is not greater than 0.175, and a normalized amplitude of a sidelobe value of a periodic cross-correlation function of the symbol sequence in the two polarization directions is not greater than 0.160.

Based on received signals in the two polarization directions, the receiving device performs DSP to restore the signals by using an FAW frame alignment word sequence and a PS pilot sequence. For example, by separately calculating correlation values between the received signals and sequence symbols of the frame alignment word sequence on the X polarization and the Y polarization, polarization directions may be distinguished, and frame alignment word alignment may be performed; and carrier phase recovery is performed by using the PS pilot signal.

The designed sequence of pilot symbols has good autocorrelation and cross-correlation characteristics, and the frame alignment word sequence and the pilot symbol sequence are combined to achieve direct current balance. This helps the receiving device improve quality of the restored signal.

In the technical solutions of this application, the frame architecture has a low delay and low complexity, and includes the frame alignment word symbols and the reserved symbols. This helps resolve polarization direction arbitrariness and dispersion measurement during signal processing at a receiving end. The designed sequence has good autocorrelation and cross-correlation characteristics. The FAW frame alignment word sequence satisfies direct current balance, and a combination of the frame alignment word sequence and the PS pilot sequence also satisfy direct current balance. This helps the receiving device restore signal quality.

It should be noted that the foregoing is merely several examples. In embodiments of this application, different pilot symbols may be obtained by using different target polynomials and corresponding seeds. For a principle, refer to the foregoing content in FIG. 9 and FIG. 12 for understanding.

The foregoing describes the transmission method for optical communication and a corresponding frame structure. The following describes devices provided in embodiments of this application with reference to the accompanying drawings.

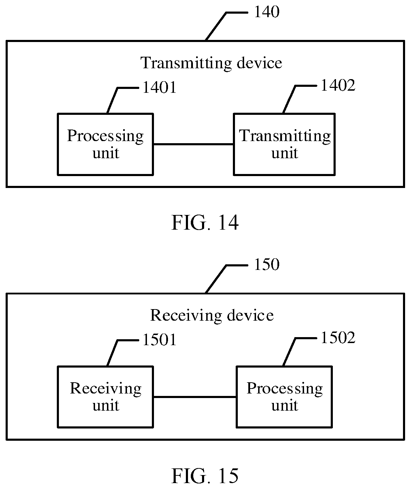

As shown in FIG. 14, a structure of a transmitting device 140 provided in an embodiment of this application includes:

a processing unit 1401, configured to generate a frame including a plurality of symbols, where in a polarization direction of two polarization directions, the frame includes $N_{FAW}$ frame alignment word symbols, $N_{PS}$ pilot symbols, and $N_{RES}$ reserved symbols, the two polarization directions are orthogonal to each other, one symbol in every M symbols in the frame is a pilot symbol in the polarization direction, M is an integer greater than 1, and $N_{FAW} + N_{RES} = M$

or $N_{FAW} + N_{RES} + 1 = M$; and each of the frame alignment word symbols and the pilot symbols is one of -A-Aj, -A+Aj, A-Aj, and A+Aj, and A is a real number, where the processing unit 1401 is configured to perform step 401 in the foregoing method embodiment; and

a transmitting unit 1402, configured to transmit the frame, where the transmitting unit 1402 is configured to perform step 402 in the foregoing method embodiment.

As shown in FIG. 15, a structure of a receiving device 150 provided in an embodiment of this application includes:

a receiving unit 1501, configured to receive a frame including a plurality of symbols, where in a polarization direction of two polarization directions, the frame includes $N_{FAW}$ frame alignment word symbols, $N_{PS}$ pilot symbols, and $N_{RES}$ reserved symbols, the two polarization directions are orthogonal to each other, one symbol in every M symbols in the frame is a pilot symbol in the polarization direction, M is an integer greater than 1, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number, where the receiving unit 1501 is configured to perform step 402 in the method embodiment; and

a processing unit 1502, configured to decode the received frame, where the processing unit 1502 is configured to perform step 403 in the foregoing method embodiment.

In this embodiment of this application, the frame generated by a transmitting device is not further divided into subframes, therefore has a simple structure, and a transmission delay is low. In addition, the $N_{FAW}$ frame alignment word symbols, the $N_{PS}$ pilot symbols, and the $N_{RES}$ reserved symbols help a receiving device better restore signal quality. Therefore, it can be learned that the frame structure in the transmission method provided in the this embodiment has a simple structure and a low transmission delay, and can further improve quality of a signal restored by the receiving device.

Optionally, in a polarization direction, there is one symbol serving as both a frame alignment word symbol and a pilot symbol in the frame, $N_{FAW} + N_{RES} = M$, and $N_{FAW} + N_{PS}$ is an odd number.

Optionally, the pilot symbols are generated by using a target polynomial and a seed, and a combination of ($N_{FAW} + N_{PS} - 1$) symbols of the $N_{PS}$ pilot symbols and the $N_{FAW}$ frame alignment word symbols achieves direct current balance.

Optionally, in the polarization direction, the frame has no symbol that is both a frame alignment word symbol and a pilot symbol, $N_{FAW} + N_{RES} + 1 = M$, and $N_{FAW} + N_{PS}$ is an even number.

Optionally, the pilot symbols are generated by using a target polynomial and a seed, and a combination of ($N_{FAW} + N_{PS}$) symbols of the $N_{PS}$ pilot symbols and the $N_{FAW}$ frame alignment word symbols achieves direct current balance.

Optionally, the $N_{FAW}$ frame alignment word symbols achieve direct current balance, and $N_{FAW}$ is an even number.

Optionally, the $N_{PS}$ pilot symbols achieve direct current balance, and $N_{PS}$ is an even number.

Optionally, a value of $N_{FAW}$ is 22 or 11.

Optionally, the plurality of symbols in the frame are in a 16QAM modulation format, and a value of A is $\pm 1$, $\pm 3$, or $\pm\sqrt{5}$.

Optionally, a value of M is 64.

Optionally, in the polarization direction, $N_{PS}=97$, $N_{FAW}=22$, and $N_{RES}=42$ in the frame, M=64, and a quantity $N_F$ of symbols in the frame is 6208.

Optionally, when the target polynomial and hexadecimal seeds in the two polarization directions are one row in the following table, a normalized amplitude of a sidelobe value of a periodic autocorrelation function of pilot symbols in a same polarization direction is not greater than 0.25, and a normalized amplitude of a periodic cross-correlation function value of pilot symbols in different polarization directions is not greater than 0.25.

| Index | Target polynomial | Seed in a polarization direction 1 | Seed in a polarization direction 2 |
|---|---|---|---|
| 1 | $x^{10} + x^9 + x^8 + x^6 + x^5 + x^4 + x^3 + x^2 + 1$ | x255 | 0x307 |
| 2 | $x^{10} + x^8 + x^7 + x^6 + x^5 + x^4 + x^2 + x^1 + 1$ | 0x005 | 0x13B |
| 3 | $x^{10} + x^8 + x^7 + x^6 + x^5 + x^4 + x^2 + x^1 + 1$ | 0x005 | 0x277 |
| 4 | $x^{10} + x^9 + x^8 + x^5 + 1$ | 0x291 | 0x137 |
| 5 | $x^{10} + x^9 + x^5 + x^2 + 1$ | 0x0E9 | 0x303 |
| 6 | $x^{10} + x^9 + x^5 + x^2 + 1$ | 0x0E9 | 0x03B |
| 7 | $x^{10} + x^9 + x^5 + x^2 + 1$ | 0x0E9 | 0x207 |
| 8 | $x^{10} + x^9 + x^8 + x^4 + x^3 + x^2 + 1$ | 0x18D | 0x15F |

(continued)

| Index | Target polynomial | Seed in a polarization direction 1 | Seed in a polarization direction 2 |
|---|---|---|---|
| 9 | $x^{10} + x^9 + x^8 + x^4 + x^3 + x^2 + 1$ | 0x35D | 0x15F |
| 10 | $x^{10} + x^9 + x^8 + x^6 + x^5 + x^4 + x^3 + x^2 + 1$ | 0x255 | 0x183 |
| 11 | $x^{10} + x^9 + x^4 + x^1 + 1$ | 0x0A9 | 0x143 |
| 12 | $x^{10} + x^9 + x^8 + x^7 + x^4 + x^1 + 1$ | 0x361 | 0x367 |
| 13 | $x^{10} + x^9 + x^8 + x^7 + x^4 + x^1 + 1$ | 0x361 | 0x1FF |
| 14 | $x^{10} + x^9 + x^8 + x^7 + x^4 + x^1 + 1$ | 0x361 | 0x3FF |
| 15 | $x^{10} + x^9 + x^8 + x^7 + x^4 + x^1 + 1$ | 0x339 | 0x1FF |
| 16 | $x^{10} + x^9 + x^8 + x^7 + x^4 + x^1 + 1$ | 0x339 | 0x3FF |
| 17 | $x^{10} + x^9 + x^8 + x^7 + x^4 + x^1 + 1$ | 0x205 | 0x203 |
| 18 | $x^{10} + x^9 + x^8 + x^7 + x^4 + x^1 + 1$ | 0x205 | 0x1FF |
| 19 | $x^{10} + x^9 + x^8 + x^7 + x^4 + x^1 + 1$ | 0x205 | 0x3FF |
| 20 | $x^{10} + x^9 + x^8 + x^7 + x^4 + x^1 + 1$ | 0x365 | 0x203 |
| 21 | $x^{10} + x^9 + x^8 + x^7 + x^4 + x^1 + 1$ | 0x3FD | 0x367 |
| 22 | $x^{10} + x^9 + x^8 + x^7 + x^6 + x^5 + x^4 + x^1 + 1$ | 0x091 | 0x25B |
| 23 | $x^{10} + x^9 + x^8 + x^7 + x^6 + x^5 + x^4 + x^1 + 1$ | 0x091 | 0x0B7 |
| 24 | $x^{10} + x^8 + x^7 + x^3 + x^2 + x^1 + 1$ | 0x359 | 0x083 |
| 25 | $x^{10} + x^8 + x^7 + x^3 + x^2 + x^1 + 1$ | 0x3B5 | 0x083 |
| 26 | $x^{10} + x^9 + x^6 + x^3 + x^2 + x^1 + 1$ | 0x389 | 0x103 |
| 27 | $x^{10} + x^9 + x^6 + x^3 + x^2 + x^1 + 1$ | 0x389 | 0x38B |
| 28 | $x^{10} + x^9 + x^6 + x^3 + x^2 + x^1 + 1$ | 0x389 | 0x207 |
| 29 | $x^{10} + x^9 + x^6 + x^3 + x^2 + x^1 + 1$ | 0x389 | 0x18F |
| 30 | $x^{10} + x^9 + x^6 + x^3 + x^2 + x^1 + 1$ | 0x099 | 0x103 |
| 31 | $x^{10} + x^9 + x^6 + x^3 + x^2 + x^1 + 1$ | 0x099 | 0x38B |
| 32 | $x^{10} + x^9 + x^6 + x^3 + x^2 + x^1 + 1$ | 0x099 | 0x207 |
| 33 | $x^{10} + x^9 + x^6 + x^3 + x^2 + x^1 + 1$ | 0x099 | 0x18F |
| 34 | $x^{10} + x^9 + x^6 + x^3 + x^2 + x^1 + 1$ | 0x199 | 0x103 |
| 35 | $x^{10} + x^9 + x^6 + x^3 + x^2 + x^1 + 1$ | 0x199 | 0x38B |
| 36 | $x^{10} + x^9 + x^6 + x^3 + x^2 + x^1 + 1$ | 0x199 | 0x207 |
| 37 | $x^{10} + x^9 + x^6 + x^3 + x^2 + x^1 + 1$ | 0x199 | 0x18F |
| 38 | $x^{10} + x^9 + x^6 + x^3 + x^2 + x^1 + 1$ | 0x09D | 0x103 |
| 39 | $x^{10} + x^9 + x^6 + x^3 + x^2 + x^1 + 1$ | 0x09D | 0x38B |
| 40 | $x^{10} + x^9 + x^6 + x^3 + x^2 + x^1 + 1$ | 0x09D | 0x207 |
| 41 | $x^{10} + x^9 + x^6 + x^3 + x^2 + x^1 + 1$ | 0x09D | 0x18F |
| 42 | $x^{10} + x^9 + x^6 + x^5 + x^4 + x^3 + x^2 + x^1 + 1$ | 0x0D9 | 0x19F |
| 43 | $x^{10} + x^9 + x^6 + x^5 + x^4 + x^3 + x^2 + x^1 + 1$ | 0x00D | 0x19F |

Optionally, when the target polynomial is $x^{10} + x^9 + x^4 + x^1 + 1$, and the corresponding hexadecimal seeds in the two polarization directions are 0x0A9 and 0x143, respective 97 pilot symbols in the two polarization directions are shown in the following table:

| Polarization direction | Pilot symbols |
|---|---|
| Polarization direction 1 | A-Aj, -A+Aj, -A+Aj, -A+Aj, -A-Aj, A-Aj, A+Aj, -A+Aj, A-Aj, A+Aj, - A-Aj, A-Aj, -A+Aj, -A+Aj, -A+Aj, A+Aj, -A+Aj, -A-Aj, -A-Aj, A-Aj, - A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, -A+Aj, -A-Aj, A+Aj, -A+Aj, A-Aj, -A-Aj, -A-Aj, A-Aj, A+Aj, -A-Aj, A+Aj, -A-Aj, -A-Aj, A+Aj, A-Aj, A-Aj, A+Aj, A-Aj, A+Aj, A+Aj, -A-Aj, A-Aj, -A-Aj, A+Aj, -A-Aj, A-Aj, -A+Aj, -A-Aj, A-Aj, -A-Aj, -A-Aj, - A-Aj, A-Aj, A+Aj, A+Aj, -A-Aj, A+Aj, A+Aj, A+Aj, -A-Aj, A+Aj, - A+Aj, A+Aj, -A-Aj, -A-Aj, A+Aj, -A-Aj, -A+Aj, -A+Aj, A-Aj, -A-Aj, - A+Aj, A-Aj, A+Aj, -A+Aj, -A-Aj, -A+Aj |
| Polarization direction 2 | A+Aj, -A-Aj, -A-Aj, A-Aj, A-Aj, -A+Aj, -A-Aj, A-Aj, A+Aj, -A-Aj, - A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, A+Aj, -A-Aj, A-Aj, -A-Aj, -A-Aj, A-Aj, - A+Aj, -A-Aj, A+Aj, A+Aj, -A-Aj, -A-Aj, A+Aj, A+Aj, A-Aj, A-Aj, A+Aj, -A-Aj, A+Aj, A+Aj, -A+Aj, -A-Aj, A+Aj, A-Aj, -A+Aj, A+Aj, - A+Aj, A-Aj, -A+Aj, -A+Aj, -A+Aj, -A+Aj, -A+Aj, -A-Aj, A+Aj, -A-Aj, A-Aj, -A-Aj, -A+Aj, -A+Aj, A-Aj, A-Aj |

Optionally, in the polarization direction, $N_{PS}$=129, $N_{FAW}$=11, and $N_{RES}$=52 in the frame, M=64, and a quantity $N_F$ of symbols in the frame is 8256.

Optionally, when the target polynomial and hexadecimal seeds in the two polarization directions are one row in the following table, a normalized amplitude of a sidelobe value of a periodic autocorrelation function of pilot symbols in a same polarization direction is not greater than 0.17, and a normalized amplitude of a periodic cross-correlation function value of pilot symbols in different polarization directions is not greater than 0.17.

| Index | Target polynomial | Seed in one polarization direction | Seed in the other polarization direction |
|---|---|---|---|
| 1 | $x^{10} + x^7 + x^3 + x + 1$ | 0x30C | 0x38F |
| 2 | $x^{10} + x^7 + x^3 + x + 1$ | 0x05C | 0x38F |
| 3 | $x^{10} + x^7 + x^3 + x + 1$ | 0x1C3 | 0x38F |
| 4 | $x^{10} + x^7 + x^3 + x + 1$ | 0x2E3 | 0x196 |
| 5 | $x^{10} + x^9 + x^8 + x^6 + x^2 + x^1 + 1$ | 0x2A3 | 0x22A |
| 6 | $x^{10} + x^9 + x^8 + x^4 + x^2 + x^1 + 1$ | 0x062 | 0x370 |
| 7 | $x^{10} + x^9 + x^8 + x^7 + x^5 + x^4 + 1$ | 0x1BB | 0x311 |
| 8 | $x^{10} + x^9 + x^4 + x^2 + 1$ | 0x3B2 | 0x11F |
| 9 | $x^{10} + x^9 + x^4 + x^2 + 1$ | 0x2CA | 0x11F |
| 10 | $x^{10} + x^9 + x^4 + x^2 + 1$ | 0x365 | 0x2F3 |
| 11 | $x^{10} + x^9 + x^4 + x^2 + 1$ | 0x083 | 0x2F3 |
| 12 | $x^{10} + x^9 + x^7 + x^6 + x^5 + x^4 + x^3 + x^2 + 1$ | 0x016 | 0x283 |
| 13 | $x^{10} + x^9 + x^7 + x^6 + x^5 + x^4 + x^3 + x^2 + 1$ | 0x05B | 0x283 |
| 14 | $x^{10} + x^8 + x^6 + x^1 + 1$ | 0x190 | 0x1FA |
| 15 | $x^{10} + x^8 + x^6 + x^1 + 1$ | 0x37B | 0x1FA |
| 16 | $x^{10} + x^8 + x^6 + x^1 + 1$ | 0x2C8 | 0x150 |
| 17 | $x^{10} + x^8 + x^6 + x^1 + 1$ | 0x321 | 0x150 |
| 18 | $x^{10} + x^8 + x^7 + x^6 + x^5 + x^4 + x^3 + x^1 + 1$ | 0x1D5 | 0x317 |
| 19 | $x^{10} + x^8 + x^7 + x^6 + x^5 + x^4 + x^3 + x^1 + 1$ | 0x357 | 0x317 |
| 20 | $x^{10} + x^9 + x^8 + x^6 + x^2 + x^1 + 1$ | 0x320 | 0x3C7 |
| 21 | $x^{10} + x^9 + x^8 + x^6 + x^2 + x^1 + 1$ | 0x351 | 0x115 |

(continued)

| Index | Target polynomial | Seed in one polarization direction | Seed in the other polarization direction |
|---|---|---|---|
| 22 | $x^{10} + x^9 + x^8 + x^6 + x^2 + x^1 + 1$ | 0x2A3 | 0x2C8 |
| 23 | $x^{10} + x^9 + x^8 + x^6 + x^2 + x^1 + 1$ | 0x2A3 | 0x164 |
| 24 | $x^{10} + x^9 + x^8 + x^6 + x^2 + x^1 + 1$ | 0x2A3 | 0x115 |
| 25 | $x^{10} + x^9 + x^8 + x^4 + x^2 + x^1 + 1$ | 0x062 | 0x2E0 |
| 26 | $x^{10} + x^9 + x^8 + x^4 + x^2 + x^1 + 1$ | 0x062 | 0x3DE |
| 27 | $x^{10} + x^9 + x^8 + x^4 + x^2 + x^1 + 1$ | 0x062 | 0x3EF |
| 28 | $x^{10} + x^9 + x^8 + x^4 + x^2 + x^1 + 1$ | 0x0C5 | 0x2E0 |
| 29 | $x^{10} + x^9 + x^8 + x^4 + x^2 + x^1 + 1$ | 0x1FB | 0x3BC |
| 30 | $x^{10} + x^6 + x^5 + x^3 + x^2 + x^1 + 1$ | 0x26B | 0x25D |

Optionally, when the target polynomial is $x^{10}+x^7+x^3+x+1$, and the corresponding hexadecimal seeds in the two polarization directions are 0x2E3 and Ox196, respective 129 pilot symbols in the two polarization directions are shown in the following table:

| Polarization direction | Pilot symbols |
|---|---|
| Polarization 1 | A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, - A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, - A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, - A+Aj, -A-Aj, A-Aj, -A-Aj, A+Aj, A+Aj, A-Aj, -A-Aj, A-Aj, A-Aj, - A+Aj, A+Aj, A+Aj, -A-Aj, A+Aj, -A-Aj, -A-Aj |
| Polarization 2 | -A+Aj, A-Aj, A-Aj, -A+Aj, A-Aj, -A-Aj, A+Aj, -A-Aj, -A-Aj, A+Aj, A-Aj, A-Aj, -A-Aj, A-Aj, -A-Aj, A+Aj, A-Aj, A-Aj, A-Aj, A+Aj, -A-Aj, - A-Aj, A-Aj, -A-Aj, -A+Aj, -A+Aj, A+Aj, -A+Aj, -A-Aj, A-Aj, -A+Aj, A+Aj, -A+Aj, A+Aj, A-Aj, A+Aj, A+Aj, A-Aj, A-Aj, -A+Aj, A+Aj, A-Aj, -A-Aj, -A+Aj, -A+Aj, A-Aj, -A+Aj, A-Aj, A+Aj, A+Aj, A-Aj, -A-Aj, - A-Aj, A+Aj, -A+Aj, -A-Aj, A+Aj, A-Aj, -A-Aj, A-Aj, A+Aj, -A+Aj, - A+Aj, A-Aj, A-Aj, A-Aj, -A+Aj, A+Aj, -A+Aj, -A+Aj, A+Aj, A+Aj, -A-Aj, A-Aj, -A-Aj, A-Aj, -A+Aj, -A+Aj, -A+Aj, A+Aj, A+Aj, A-Aj, A+Aj, -A-Aj, -A+Aj, -A+Aj, A+Aj, A-Aj, -A+Aj, -A-Aj, A+Aj, -A+Aj, A-Aj, - A+Aj, A+Aj, -A+Aj, -A-Aj, A+Aj, -A+Aj, -A+Aj, -A-Aj, -A+Aj, A+Aj, A-Aj, -A-Aj, A+Aj, -A-Aj, A-Aj, A-Aj, A-Aj, -A+Aj, -A-Aj, -A-Aj, A+Aj, -A+Aj, -A+Aj, A+Aj, -A-Aj, -A+Aj, -A-Aj, A-Aj, -A-Aj, A-Aj, A+Aj, -A-Aj, -A+Aj, -A-Aj, A+Aj, -A-Aj |

Optionally, the $N_{FAW}$ frame alignment word symbols are training symbols for link training.

In embodiments of this application, operations performed by the units in the transmitting device and the receiving device are similar to those described in the embodiment shown in FIG. 4 to FIG. 13. Details are not described herein again.

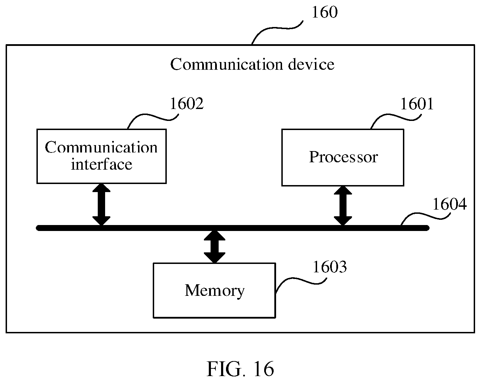

FIG. 16 is a diagram of a possible logic structure of a communication device according to an embodiment of this application. The communication device may be a transmitting device or a receiving device, and the communication device may be a terminal device or a network device. As shown in FIG. 16, a communication device 160 provided in this embodiment of this application includes a processor 1601, a communication interface 1602, a memory 1603, and a bus 1604. The processor 1601, the communication interface 1602, and the memory 1603 are connected to each other through the bus 1604. In this embodiment of this application, the processor 1601 is configured to control and manage an action of the communication device 160. For example, the processor 1601 is configured to perform a frame generation process or a frame decoding process. The communication interface 1602 is configured to support the communication device 160 in communication. For example, the communication interface 1602 may perform the steps of transmitting and receiving data in the foregoing method embodiments. The memory 1603 is configured to store program code and data of the communication device 160.

The processor 1601 may be a central processing unit, a general-purpose processor, a digital signal processor, an application-specific integrated circuit, a field programmable gate array or another programmable logical device, a transistor logical device, a hardware component, or any combination thereof. The processor 1601 may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 1604 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is used to represent the bus in FIG. 16, but this does not mean that there is only one bus or only one type of bus.

In another embodiment of this application, a computer-readable storage medium is further provided. The computer-readable storage medium stores computer-executable instructions. When a processor of a terminal executes the computer-executable instructions, a transmitting device performs the steps performed by the transmitting device in FIG. 4 to FIG. 13.

In another embodiment of this application, a computer-readable storage medium is further provided. The computer-readable storage medium stores computer-executable instructions. When a processor of a terminal executes the computer-executable instructions, a receiving device performs the steps performed by the receiving device in FIG. 4 to FIG. 13.

In another embodiment of this application, a computer program product is further provided. The computer program product includes computer program code. When the computer program code is executed on a computer, the computer device performs the steps performed by the terminal in FIG. 4 to FIG. 13.

In another embodiment of this application, a chip system is further provided. The chip system includes one or more interface circuits and one or more processors. The interface circuit and the processor are interconnected through a line. The interface circuit is configured to: receive a signal from a memory of a terminal, and transmit a signal to the processor, where the signal includes computer instructions stored in the memory. When the processor executes the computer instructions, the terminal performs the steps performed by the transmitting device in FIG. 4 to FIG. 13. In a possible design, the chip system further includes a memory. The memory is configured to store program instructions and data that are necessary for a control device. The chip system may include a chip; or may include a chip and another discrete component.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units may be integrated into one unit. All or some of the integrated units may be implemented by using software, hardware, firmware, or any combination thereof.

When software is used to implement the integrated units, all or some of the integrated units may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

**Claims**

1. A transmission method for optical communication, wherein the method comprises:

generating a frame comprising a plurality of symbols, wherein in a polarization direction of two polarization directions, the frame comprises $N_{FAW}$ frame alignment word symbols, $N_{PS}$ pilot symbols, and $N_{RES}$ reserved symbols, the two polarization directions are orthogonal to each other, in the polarization direction, one symbol in every M symbols in the frame is a pilot symbol, M is an integer greater than 1, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number; and
transmitting the frame.

2. The transmission method according to claim 1, wherein in the polarization direction, there is one symbol serving as both a frame alignment word symbol and a pilot symbol in the frame, $N_{FAW} + N_{RES} = M$, and $N_{FAW} + N_{PS}$ is an odd number.

3. The transmission method according to claim 2, wherein the pilot symbols are generated by using a target polynomial and a seed, and a combination of $(N_{FAW} + N_{PS} - 1)$ symbols of the $N_{PS}$ pilot symbols and the $N_{FAW}$ frame alignment word symbols achieves direct current balance.

4. The transmission method according to claim 1, wherein in the polarization direction, there is no symbol serving as both a frame alignment word symbol and a pilot symbol in the frame, $N_{FAW} + N_{RES} + 1 = M$, and $N_{FAW} + N_{PS}$ is an even number.

5. The transmission method according to claim 4, wherein the pilot symbols are generated by using a target polynomial and a seed, and a combination of $(N_{FAW} + N_{PS})$ symbols of the $N_{PS}$ pilot symbols and the $N_{FAW}$ frame alignment word symbols achieves direct current balance.

6. The transmission method according to any one of claims 1 to 5, wherein a value of $N_{FAW}$ is 22 or 11.

7. The transmission method according to any one of claims 1 to 6, wherein the plurality of symbols in the frame are in a 16QAM modulation format, and a value of A is $\pm 1$, $\pm 3$, or $\pm\sqrt{5}$.

8. The transmission method according to any one of claims 1 to 7, wherein a value of M is 64.

9. The transmission method according to claim 3 or 5, wherein the target polynomial is one polynomial in the following table:

| Index | Target polynomial |
|---|---|
| 1 | $x^{10} + x^9 + x^8 + x^6 + x^5 + x^4 + x^3 + x^2 + 1$ |
| 2 | $x^{10} + x^8 + x^7 + x^6 + x^5 + x^4 + x^2 + x^1 + 1$ |
| 3 | $x^{10} + x^9 + x^8 + x^5 + 1$ |
| 4 | $x^{10} + x^9 + x^5 + x^2 + 1$ |
| 5 | $x^{10} + x^9 + x^8 + x^4 + x^3 + x^2 + 1$ |
| 6 | $x^{10} + x^9 + x^8 + x^6 + x^5 + x^4 + x^3 + x^2 + 1$ |
| 7 | $x^{10} + x^9 + x^4 + x^1 + 1$ |
| 8 | $x^{10} + x^9 + x^8 + x^7 + x^4 + x^1 + 1$ |
| 9 | $x^{10} + x^9 + x^8 + x^7 + x^6 + x^5 + x^4 + x^1 + 1$ |
| 10 | $x^{10} + x^8 + x^7 + x^3 + x^2 + x^1 + 1$ |
| 11 | $x^{10} + x^9 + x^6 + x^3 + x^2 + x^1 + 1$ |
| 12 | $x^{10} + x^9 + x^6 + x^5 + x^4 + x^3 + x^2 + x^1 + 1$ |

(continued)

| Index | Target polynomial |
|---|---|
| 13 | $x^{10} + x^9 + x^6 + x^5 + x^4 + x^3 + x^2 + x^1 + 1$ |
| 14 | $x^{10} + x^7 + x^3 + x + 1$ |
| 15 | $x^{10} + x^9 + x^8 + x^6 + x^2 + x^1 + 1$ |
| 16 | $x^{10} + x^9 + x^8 + x^4 + x^2 + x^1 + 1$ |
| 17 | $x^{10} + x^9 + x^8 + x^7 + x^5 + x^4 + 1$ |
| 18 | $x^{10} + x^9 + x^4 + x^2 + 1$ |
| 19 | $x^{10} + x^9 + x^7 + x^6 + x^5 + x^4 + x^3 + x^2 + 1$ |
| 20 | $x^{10} + x^8 + x^6 + x^1 + 1$ |
| 21 | $x^{10} + x^8 + x^7 + x^6 + x^5 + x^4 + x^3 + x^1 + 1$ |
| 22 | $x^{10} + x^9 + x^8 + x^6 + x^2 + x^1 + 1$ |
| 23 | $x^{10} + x^9 + x^8 + x^4 + x^2 + x^1 + 1$ |
| 24 | $x^{10} + x^6 + x^5 + x^3 + x^2 + x^1 + 1$ |
| 25 | $x^{10} + x^8 + x^4 + x^3 + 1$ |

10. The transmission method according to claim 9, wherein in the polarization direction, $N_{PS}$=97, $N_{FAW}$=22, and $N_{RES}$=42 in the frame, M=64, and a quantity $N_F$ of symbols in the frame is 6208.

11. The transmission method according to claim 10, wherein when the target polynomial and hexadecimal seeds in the two polarization directions are one row in the following table, a normalized amplitude of a sidelobe value of a periodic autocorrelation function of pilot symbols in a same polarization direction is not greater than 0.25, and a normalized amplitude of a periodic cross-correlation function value of pilot symbols in different polarization directions is not greater than 0.25:

| Index | Target polynomial | Seed in a polarization direction 1 | Seed in a polarization direction 2 |
|---|---|---|---|
| 1 | $x^{10} + x^9 + x^8 + x^6 + x^5 + x^4 + x^3 + x^2 + 1$ | 0x255 | 0x307 |
| 2 | $x^{10} + x^8 + x^7 + x^6 + x^5 + x^4 + x^2 + x^1 + 1$ | 0x005 | 0x13B |
| 3 | $x^{10} + x^8 + x^7 + x^6 + x^5 + x^4 + x^2 + x^1 + 1$ | 0x005 | 0x277 |
| 4 | $x^{10} + x^9 + x^8 + x^5 + 1$ | 0x291 | 0x137 |
| 5 | $x^{10} + x^9 + x^5 + x^2 + 1$ | 0x0E9 | 0x303 |
| 6 | $x^{10} + x^9 + x^5 + x^2 + 1$ | 0x0E9 | 0x03B |
| 7 | $x^{10} + x^9 + x^5 + x^2 + 1$ | 0x0E9 | 0x207 |
| 8 | $x^{10} + x^9 + x^8 + x^4 + x^3 + x^2 + 1$ | 0x18D | 0x15F |
| 9 | $x^{10} + x^9 + x^8 + x^4 + x^3 + x^2 + 1$ | 0x35D | 0x15F |
| 10 | $x^{10} + x^9 + x^8 + x^6 + x^5 + x^4 + x^3 + x^2 + 1$ | 0x255 | 0x183 |
| 11 | $x^{10} + x^9 + x^4 + x^1 + 1$ | 0x0A9 | 0x143 |
| 12 | $x^{10} + x^9 + x^8 + x^7 + x^4 + x^1 + 1$ | 0x361 | 0x367 |
| 13 | $x^{10} + x^9 + x^8 + x^7 + x^4 + x^1 + 1$ | 0x361 | 0x1FF |
| 14 | $x^{10} + x^9 + x^8 + x^7 + x^4 + x^1 + 1$ | 0x361 | 0x3FF |
| 15 | $x^{10} + x^9 + x^8 + x^7 + x^4 + x^1 + 1$ | 0x339 | 0x1FF |
| 16 | $x^{10} + x^9 + x^8 + x^7 + x^4 + x^1 + 1$ | 0x339 | 0x3FF |
| 17 | $x^{10} + x^9 + x^8 + x^7 + x^4 + x^1 + 1$ | 0x205 | 0x203 |

(continued)

| Index | Target polynomial | Seed in a polarization direction 1 | Seed in a polarization direction 2 |
|---|---|---|---|
| 18 | $x^{10} + x^9 + x^8 + x^7 + x^4 + x^1 + 1$ | 0x205 | 0x1FF |
| 19 | $x^{10} + x^9 + x^8 + x^7 + x^4 + x^1 + 1$ | 0x205 | 0x3FF |
| 20 | $x^{10} + x^9 + x^8 + x^7 + x^4 + x^1 + 1$ | 0x365 | 0x203 |
| 21 | $x^{10} + x^9 + x^8 + x^7 + x^4 + x^1 + 1$ | 0x3FD | 0x367 |
| 22 | $x^{10} + x^9 + x^8 + x^7 + x^6 + x^5 + x^4 + x^1 + 1$ | 0x091 | 0x25B |
| 23 | $x^{10} + x^9 + x^8 + x^7 + x^6 + x^5 + x^4 + x^1 + 1$ | 0x091 | 0x0B7 |
| 24 | $x^{10} + x^8 + x^7 + x^3 + x^2 + x^1 + 1$ | 0x359 | 0x083 |
| 25 | $x^{10} + x^8 + x^7 + x^3 + x^2 + x^1 + 1$ | 0x3B5 | 0x083 |
| 26 | $x^{10} + x^9 + x^6 + x^3 + x^2 + x^1 + 1$ | 0x389 | 0x103 |
| 27 | $x^{10} + x^9 + x^6 + x^3 + x^2 + x^1 + 1$ | 0x389 | 0x38B |
| 28 | $x^{10} + x^9 + x^6 + x^3 + x^2 + x^1 + 1$ | 0x389 | 0x207 |
| 29 | $x^{10} + x^9 + x^6 + x^3 + x^2 + x^1 + 1$ | 0x389 | 0x18F |
| 30 | $x^{10} + x^9 + x^6 + x^3 + x^2 + x^1 + 1$ | 0x099 | 0x103 |
| 31 | $x^{10} + x^9 + x^6 + x^3 + x^2 + x^1 + 1$ | 0x099 | 0x38B |
| 32 | $x^{10} + x^9 + x^6 + x^3 + x^2 + x^1 + 1$ | 0x099 | 0x207 |
| 33 | $x^{10} + x^9 + x^6 + x^3 + x^2 + x^1 + 1$ | 0x099 | 0x18F |
| 34 | $x^{10} + x^9 + x^6 + x^3 + x^2 + x^1 + 1$ | 0x199 | 0x103 |
| 35 | $x^{10} + x^9 + x^6 + x^3 + x^2 + x^1 + 1$ | 0x199 | 0x38B |
| 36 | $x^{10} + x^9 + x^6 + x^3 + x^2 + x^1 + 1$ | 0x199 | 0x207 |
| 37 | $x^{10} + x^9 + x^6 + x^3 + x^2 + x^1 + 1$ | 0x199 | 0x18F |
| 38 | $x^{10} + x^9 + x^6 + x^3 + x^2 + x^1 + 1$ | 0x09D | 0x103 |
| 39 | $x^{10} + x^9 + x^6 + x^3 + x^2 + x^1 + 1$ | 0x09D | 0x38B |
| 40 | $x^{10} + x^9 + x^6 + x^3 + x^2 + x^1 + 1$ | 0x09D | 0x207 |
| 41 | $x^{10} + x^9 + x^6 + x^3 + x^2 + x^1 + 1$ | 0x09D | 0x18F |
| 42 | $x^{10} + x^9 + x^6 + x^5 + x^4 + x^3 + x^2 + x^1 + 1$ | 0x0D9 | 0x19F |
| 43 | $x^{10} + x^9 + x^6 + x^5 + x^4 + x^3 + x^2 + x^1 + 1$ | 0x00D | 0x19F |

12. The transmission method according to claim 11, wherein when the target polynomial is $x^{10} + x^9 + x^4 + x^1 + 1$, and the corresponding hexadecimal seeds in the two polarization directions are 0x0A9 and Ox143, respective 97 pilot symbols in the two polarization directions are shown in the following table:

| Polarization direction | Pilot symbols |
|---|---|
| Polarization 1 | A-Aj, -A+Aj, -A+Aj, -A+Aj, -A-Aj, A-Aj, A+Aj, -A+Aj, A-Aj, A+Aj, - A-Aj, A-Aj, -A+Aj, -A+Aj, -A+Aj, A+Aj, -A+Aj, -A-Aj, -A-Aj, A-Aj, - A+Aj, -A+Aj, -A-Aj, -A-Aj, A-Aj, A-Aj, A-Aj, A+Aj, -A+Aj, A-Aj, -A-Aj, A+Aj, -A+Aj, -A-Aj, -A+Aj, A+Aj, A-Aj, A+Aj, -A+Aj, A+Aj, - A+Aj, -A-Aj, A+Aj, -A+Aj, A-Aj, -A-Aj, -A-Aj, A-Aj, A+Aj, -A-Aj, A+Aj, -A-Aj, A-Aj, A+Aj, A-Aj, A-Aj, A+Aj, A-Aj, A+Aj, A+Aj, A-Aj, A-Aj, -A-Aj, A+Aj, -A-Aj, A-Aj, -A+Aj, A-Aj, A-Aj, -A-Aj, -A-Aj, - A-Aj, A-Aj, A+Aj, A+Aj, -A-Aj, A+Aj, A+Aj, A+Aj, -A-Aj, A+Aj, - A+Aj, A+Aj, -A-Aj, -A-Aj, A+Aj, -A-Aj, -A+Aj, -A+Aj, A-Aj, -A-Aj, - A+Aj, A-Aj, A+Aj, -A+Aj, -A-Aj, -A+Aj |

(continued)

| Polarization direction | Pilot symbols |
|---|---|
| Polarization 2 | A+Aj, -A-Aj, -A-Aj, A-Aj, A-Aj, -A+Aj, -A-Aj, A-Aj, A+Aj, -A-Aj, -A+Aj, -A-Aj, A-Aj, -A-Aj, -A-Aj, -A+Aj, A-Aj, A+Aj, A-Aj, A+Aj, A-Aj, -A+Aj, -A+Aj, A-Aj, -A+Aj, -A+Aj, A-Aj, A-Aj, A-Aj, -A+Aj, A+Aj, A-Aj, A+Aj, A-Aj, -A-Aj, A-Aj, -A+Aj, A+Aj, A+Aj, A+Aj, A-Aj, -A+Aj, -A+Aj, -A-Aj, -A+Aj, -A+Aj, -A+Aj, -A-Aj, -A+Aj, -A-Aj, A-Aj, A+Aj, A+Aj, A-Aj, A+Aj, A+Aj, -A-Aj, A-Aj, -A-Aj, -A-Aj, A-Aj, - A+Aj, -A-Aj, A+Aj, A+Aj, -A-Aj, -A-Aj, A+Aj, A+Aj, A-Aj, A-Aj, A+Aj, -A-Aj, A+Aj, A+Aj, -A+Aj, -A-Aj, A+Aj, A-Aj, -A+Aj, A+Aj, - A+Aj, A-Aj, -A+Aj, -A+Aj, -A+Aj, -A+Aj, A+Aj, -A-Aj, A+Aj, -A-Aj, A-Aj, -A-Aj, -A+Aj, -A+Aj, A-Aj, A-Aj |

**13.** The transmission method according to claim 9, wherein in the polarization direction, $N_{PS}$=129, $N_{FAW}$=11, and $N_{RES}$=52 in the frame, M=64, and a quantity $N_F$ of symbols in the frame is 8256.

**14.** The transmission method according to claim 13, wherein when the target polynomial and hexadecimal seeds in the two polarization directions are one row in the following table, a normalized amplitude of a sidelobe value of a periodic autocorrelation function of pilot symbols in a same polarization direction is not greater than 0.17, and a normalized amplitude of a periodic cross-correlation function value of pilot symbols in different polarization directions is not greater than 0.17:

| Index | Target polynomial | Seed in one polarization direction | Seed in the other polarization direction |
|---|---|---|---|
| 1 | $x^{10} + x^7 + x^3 + x + 1$ | 0x30C | 0x38F |
| 2 | $x^{10} + x^7 + x^3 + x + 1$ | 0x05C | 0x38F |
| 3 | $x^{10} + x^7 + x^3 + x + 1$ | 0x1C3 | 0x38F |
| 4 | $x^{10} + x^7 + x^3 + x + 1$ | 0x2E3 | 0x196 |
| 5 | $x^{10} + x^9 + x^8 + x^6 + x^2 + x^1 + 1$ | 0x2A3 | 0x22A |
| 6 | $x^{10} + x^9 + x^8 + x^4 + x^2 + x^1 + 1$ | 0x062 | 0x370 |
| 7 | $x^{10} + x^9 + x^8 + x^7 + x^5 + x^4 + 1$ | 0x1BB | 0x311 |
| 8 | $x^{10} + x^9 + x^4 + x^2 + 1$ | 0x3B2 | 0x11F |
| 9 | $x^{10} + x^9 + x^4 + x^2 + 1$ | 0x2CA | 0x11F |
| 10 | $x^{10} + x^9 + x^4 + x^2 + 1$ | 0x365 | 0x2F3 |
| 11 | $x^{10} + x^9 + x^4 + x^2 + 1$ | 0x083 | 0x2F3 |
| 12 | $x^{10} + x^9 + x^7 + x^6 + x^5 + x^4 + x^3 + x^2 + 1$ | 0x016 | 0x283 |
| 13 | $x^{10} + x^9 + x^7 + x^6 + x^5 + x^4 + x^3 + x^2 + 1$ | 0x05B | 0x283 |
| 14 | $x^{10} + x^8 + x^6 + x^1 + 1$ | 0X190 | 0X1FA |
| 15 | $x^{10} + x^8 + x^6 + x^1 + 1$ | 0x37B | 0x1FA |
| 16 | $x^{10} + x^8 + x^6 + x^1 + 1$ | 0x2C8 | 0x150 |
| 17 | $x^{10} + x^8 + x^6 + x^1 + 1$ | 0x321 | 0x150 |
| 18 | $x^{10} + x^8 + x^7 + x^6 + x^5 + x^4 + x^3 + x^1 + 1$ | 0x1D5 | 0x317 |
| 19 | $x^{10} + x^8 + x^7 + x^6 + x^5 + x^4 + x^3 + x^1 + 1$ | 0x357 | 0x317 |
| 20 | $x^{10} + x^9 + x^8 + x^6 + x^2 + x^1 + 1$ | 0x320 | 0x3C7 |
| 21 | $x^{10} + x^9 + x^8 + x^6 + x^2 + x^1 + 1$ | 0x351 | 0x115 |
| 22 | $x^{10} + x^9 + x^8 + x^6 + x^2 + x^1 + 1$ | 0x2A3 | 0x2C8 |
| 23 | $x^{10} + x^9 + x^8 + x^6 + x^2 + x^1 + 1$ | 0x2A3 | 0x164 |
| 24 | $x^{10} + x^9 + x^8 + x^6 + x^2 + x^1 + 1$ | 0x2A3 | 0x115 |

(continued)

| Index | Target polynomial | Seed in one polarization direction | Seed in the other polarization direction |
|---|---|---|---|
| 25 | $x^{10} + x^9 + x^8 + x^4 + x^2 + x^1 + 1$ | 0x062 | 0x2E0 |
| 26 | $x^{10} + x^9 + x^8 + x^4 + x^2 + x^1 + 1$ | 0x062 | 0x3DE |
| 27 | $x^{10} + x^9 + x^8 + x^4 + x^2 + x^1 + 1$ | 0x062 | 0x3EF |
| 28 | $x^{10} + x^9 + x^8 + x^4 + x^2 + x^1 + 1$ | 0x0C5 | 0x2E0 |
| 29 | $x^{10} + x^9 + x^8 + x^4 + x^2 + x^1 + 1$ | 0x1FB | 0x3BC |
| 30 | $x^{10} + x^6 + x^5 + x^3 + x^2 + x^1 + 1$ | 0x26B | 0x25D |

**15.** The transmission method according to claim 14, wherein when the target polynomial is $x^{10}+x^7+x^3+x+1$, and the corresponding hexadecimal seeds in the two polarization directions are 0x2E3 and Ox196, respective 129 pilot symbols in the two polarization directions are shown in the following table:

| Polarization direction | Pilot symbols |
|---|---|
| Polarization 1 | A+Aj, -A-Aj, -A+Aj, A+Aj, -A+Aj, A+Aj, -A-Aj, A-Aj, A+Aj, -A+Aj, A-Aj, A+Aj, -A-Aj, -A-Aj, A+Aj, -A-Aj, A+Aj, -A-Aj, -A+Aj, -A-Aj, -A+Aj, -A+Aj, -A-Aj, -A+Aj, A-Aj, A-Aj, A-Aj, A-Aj, A-Aj, A+Aj, A+Aj, -A+Aj, -A-Aj, A-Aj, A+Aj, A-Aj, -A+Aj, -A-Aj, A-Aj, -A+Aj, -A-Aj, -A-Aj, -A+Aj, -A-Aj, -A+Aj, -A-Aj, -A-Aj, A+Aj, A+Aj, -A-Aj, A+Aj, A+Aj, -A+Aj, A-Aj, -A+Aj, A-Aj, -A+Aj, A-Aj, A-Aj, A+Aj, -A-Aj, -A+Aj, A-Aj, A-Aj, -A-Aj, A+Aj, A-Aj, -A-Aj, A+Aj, A+Aj, A+Aj, -A-Aj, -A-Aj, A+Aj, A+Aj, A-Aj, A-Aj, A+Aj, A-Aj, A-Aj, A+Aj, -A+Aj, A+Aj, -A+Aj, A+Aj, -A+Aj, A-Aj, -A+Aj, -A-Aj, -A-Aj, A-Aj, -A+Aj, A+Aj, A-Aj, A-Aj, -A-Aj, -A+Aj, -A+Aj, -A+Aj, -A-Aj, -A-Aj, -A+Aj, -A+Aj, -A+Aj, A-Aj, -A+Aj, -A+Aj, A-Aj, -A+Aj, -A-Aj, A-Aj, A+Aj, -A+Aj, -A-Aj, A-Aj, -A-Aj, A+Aj, A+Aj, A-Aj, -A-Aj, A-Aj, A-Aj, -A+Aj, A+Aj, A+Aj, -A-Aj, A+Aj, -A-Aj, -A-Aj |
| Polarization 2 | -A+Aj, A-Aj, A-Aj, -A+Aj, A-Aj, -A-Aj, A+Aj, -A-Aj, -A-Aj, A+Aj, A-Aj, A-Aj, -A-Aj, A-Aj, -A-Aj, A+Aj, A-Aj, A-Aj, A-Aj, A+Aj, -A-Aj, -A-Aj, A-Aj, -A-Aj, -A+Aj, -A+Aj, A+Aj, -A+Aj, -A-Aj, A-Aj, - A+Aj, A+Aj, -A+Aj, A+Aj, A-Aj, A+Aj, A+Aj, A-Aj, A-Aj, -A+Aj, A+Aj, A-Aj, -A-Aj, -A+Aj, -A+Aj, A-Aj, -A+Aj, A-Aj, A+Aj, A+Aj, A-Aj, -A-Aj, -A-Aj, A+Aj, -A+Aj, -A-Aj, A+Aj, A-Aj, -A-Aj, A-Aj, A+Aj, -A+Aj, -A+Aj, A-Aj, A-Aj, A-Aj, -A+Aj, A+Aj, -A+Aj, -A+Aj, A+Aj, A+Aj, -A-Aj, A-Aj, -A-Aj, A-Aj, -A+Aj, -A+Aj, -A+Aj, A+Aj, A+Aj, A-Aj, A+Aj, -A-Aj, -A+Aj, -A+Aj, A+Aj, A-Aj, -A+Aj, -A-Aj, A+Aj, -A+Aj, A-Aj, -A+Aj, A+Aj, -A+Aj, -A-Aj, A+Aj, -A+Aj, -A+Aj, -A-Aj, -A+Aj, A+Aj, A-Aj, -A-Aj, A+Aj, -A-Aj, A-Aj, A-Aj, A-Aj, - A+Aj, -A-Aj, -A-Aj, A+Aj, -A+Aj, -A+Aj, A+Aj, -A-Aj, -A+Aj, -A-Aj, A-Aj, -A-Aj, A-Aj, A+Aj, -A-Aj, -A+Aj, -A-Aj, A+Aj, -A-Aj |

**16.** The transmission method according to any one of claims 1 to 15, wherein the $N_{FAW}$ frame alignment word symbols are training symbols for link training.

**17.** A transmission method for optical communication, wherein the method comprises:

receiving a frame comprising a plurality of symbols, wherein in a polarization direction of two polarization directions, the frame comprises $N_{FAW}$ frame alignment word symbols, $N_{PS}$ pilot symbols, and $N_{RES}$ reserved symbols, the two polarization directions are orthogonal to each other, in the polarization direction, one symbol in every M symbols in the frame is a pilot symbol, M is an integer greater than 1, and $N_{FAW} + N_{RES} = M$ or $N_{FAW} + N_{RES} + 1 = M$; and each of the frame alignment word symbols and the pilot symbols is one of -A-Aj, -A+Aj, A-Aj, and A+Aj, and A is a real number; and
decoding the received frame.

**18.** A transmitting device for optical communication, wherein the transmitting device comprises a processor and a memory, the memory is configured to store instructions, and the processor is configured to execute the instructions, to enable the transmitting device to perform the transmission method according to any one of claims 1 to 16.

**19.** A receiving device for optical communication, wherein the receiving device comprises a processor and a memory, the memory is configured to store instructions, and the processor is configured to execute the instructions, to enable the receiving device to perform the receiving method according to claim 17.

20. A system for optical communication, wherein the system comprises the transmitting device according to claim 18 and the receiving device according to claim 19.

21. A computer-readable storage medium, wherein the computer-readable storage medium stores instructions; and when the instructions are run on a transmitting device, the transmitting device is enabled to perform the method according to any one of claims 1 to 16; or when the instructions are run on a receiving device, the receiving device is enabled to perform the method according to claim 17.

FIG. 1

FIG. 2

FIG. 3

FIG. 4

X polarization

Y polarization

FIG. 5A

FIG. 5B

FIG. 6A

**$N_{FAW}$ symbols as a frame alignment word symbol sequence**

**$N_{RES}$ symbols as reserved symbols**

**Symbols before framing include information and parity symbols**

**$N_{PS}$ symbols as a pilot sequence**

| 1 | $N_{FAW}$ | $N_{RES}$ | | 1 | M–1 | | ... | 1 | M–1 |

← M symbols → ← M symbols → ← M symbols →

← $M \times N_{PS}$ symbols →

FIG. 6B

Output bits    Symbols

$$b_0 \atop b_1 \} (2b_0-1)A+(2b_1-1)Aj$$

$$b_2 \atop b_3 \} (2b_2-1)A+(2b_3-1)Aj$$

$$b_4 \atop b_5 \} (2b_4-1)A+(2b_5-1)Aj$$

$$b_6 \atop b_7 \} (2b_6-1)A+(2b_7-1)Aj$$

$\vdots$

$a_9$  $a_8$  $a_7$  $a_6$  $a_5$  $a_4$  $a_3$  $a_2$  $a_1$

$m_9$  $m_8$  $m_7$  $m_6$  $m_5$  $m_4$  $m_3$  $m_2$  $m_1$  $m_0$  Output

FIG. 7

The 1st symbol of the frame alignment word symbol sequence is also used as the 1st symbol of the pilot sequence

22 symbols as a frame alignment word symbol sequence

Symbols before framing include information and parity symbols

42 symbols as reserved symbols

97 symbols as a pilot sequence

22

42

64 symbols

64 symbols

1

63

64 symbols

...

1

63

64 symbols

6208 symbols

FIG. 8

An X-polarization
seed: 0x0A9

A Y-polarization
seed: 0x143

Output

Output X
polarization

Output Y
polarization

| | |
|---|---|
| 0 1 } −A+Aj | 0 0 } −A−Aj |
| 1 1 } A+Aj | 0 1 } −A+Aj |
| 1 1 } A+Aj | 1 1 } A+Aj |
| 0 1 } −A+Aj | 0 1 } −A+Aj |
| 0 0 } −A−Aj | 1 0 } A−Aj |
| 0 1 } −A+Aj | 1 1 } A+Aj |
| ⋮ | ⋮ |

FIG. 9

FIG. 10

11 symbols as a frame alignment word symbol sequence

52 symbols as reserved symbols

Symbols before framing include information and parity symbols

129 symbols as a pilot sequence

| 1 | 11 | 52 | 1 | 63 | ... | 1 | 63 |

64 symbols     64 symbols     64 symbols

8256 symbols

FIG. 11

43

An X-polarization seed: 0x2E3 → 1 0 1 1 1 0 0 0 1 1 Output

A Y-polarization seed: 0x196 → 0 1 1 0 0 1 0 1 1 0

**FIG. 12**

| Output X polarization | | Output Y polarization | |
|---|---|---|---|
| 0 1 | −A+Aj | 0 0 | −A−Aj |
| 1 1 | A+Aj | 0 1 | −A+Aj |
| 1 1 | A+Aj | 1 1 | A+Aj |
| 0 1 | −A+Aj | 0 1 | −A+Aj |
| 0 0 | −A−Aj | 1 0 | A−Aj |
| 0 1 | −A+Aj | 1 1 | A+Aj |
| ⋮ | | ⋮ | |

EP 4 510 471 A1

FIG. 13

(a)

(b)

(c)

Offset

Normalized amplitude

0.0 0.2 0.4 0.6 0.8 1.0

0 20 40 60 80 100 120

140

Transmitting device

1401

Processing unit

1402

Transmitting unit

FIG. 14

150

Receiving device

1501

Receiving unit

1502

Processing unit

FIG. 15

160

Communication device

1602

Communication
interface

1601

Processor

1604

1603

Memory

FIG. 16

## INTERNATIONAL SEARCH REPORT

| International application No. |
|---|
| **PCT/CN2023/081300** |

**A.    CLASSIFICATION OF SUBJECT MATTER**

H04B10/54(2013.01)i;H04B10/61(2013.01)i

According to International Patent Classification (IPC) or to both national classification and IPC

**B.    FIELDS SEARCHED**

Minimum documentation searched (classification system followed by classification symbols)

IPC:H04B; H04L; H04J,H04M

Documentation searched other than minimum documentation to the extent that such documents are included in the fields searched

Electronic data base consulted during the international search (name of data base and, where practicable, search terms used)

CNTXT, ENTXT, ENTXTC, VEN: 导频, 同步, 符号, 多项式, 光, 光通信, 帧, 偏振, 星座, 序列, 种子, frame, Optical, polariz +, pilot, Synchr+, symbol, multinomial, seed, constellation

**C.    DOCUMENTS CONSIDERED TO BE RELEVANT**

| Category* | Citation of document, with indication, where appropriate, of the relevant passages | Relevant to claim No. |
|---|---|---|
| PX | CN 114978337 A (HUAWEI TECHNOLOGIES CO., LTD.) 30 August 2022 (2022-08-30) description, paragraphs 144-986 | 1-21 |
| A | US 2019068322 A1 (INPHI CORP.) 28 February 2019 (2019-02-28) description, paragraphs 6-12 | 1-21 |
| A | CN 103329462 A (VIASAT, INC.) 25 September 2013 (2013-09-25) entire document | 1-21 |
| A | CN 103907294 A (ALCATEL LUCENT) 02 July 2014 (2014-07-02) entire document | 1-21 |
| A | US 2021399870 A1 (INFINERA CORP.) 23 December 2021 (2021-12-23) entire document | 1-21 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 May 2023** | **29 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<thead>
<tr><th colspan="2">INTERNATIONAL SEARCH REPORT<br>Information on patent family members</th><th colspan="2">International application No.<br><br>PCT/CN2023/081300</th></tr>
</thead>
</table>

| Patent document cited in search report | | | Publication date (day/month/year) | Patent family member(s) | | | Publication date (day/month/year) |
|---|---|---|---|---|---|---|---|
| CN | 114978337 | A | 30 August 2022 | WO | 2022222933 | A1 | 27 October 2022 |
| US | 2019068322 | A1 | 28 February 2019 | US | 2021083801 | A1 | 18 March 2021 |
| | | | | US | 2022158759 | A1 | 19 May 2022 |
| | | | | US | 2019305884 | A1 | 03 October 2019 |
| | | | | CN | 208956063 | U | 07 June 2019 |
| CN | 103329462 | A | 25 September 2013 | EP | 2666249 | A2 | 27 November 2013 |
| | | | | WO | 2012100254 | A2 | 26 July 2012 |
| | | | | JP | 2014510436 | A | 24 April 2014 |
| | | | | US | 2012189322 | A1 | 26 July 2012 |
| | | | | US | 2014079406 | A1 | 20 March 2014 |
| CN | 103907294 | A | 02 July 2014 | WO | 2013039968 | A1 | 21 March 2013 |
| | | | | US | 2013070785 | A1 | 21 March 2013 |
| | | | | KR | 20140059850 | A | 16 May 2014 |
| | | | | EP | 2756616 | A1 | 23 July 2014 |
| | | | | US | 2013070786 | A1 | 21 March 2013 |
| | | | | JP | 2014527378 | A | 09 October 2014 |
| | | | | WO | 2013040004 | A1 | 21 March 2013 |
| US | 2021399870 | A1 | 23 December 2021 | US | 2022052765 | A1 | 17 February 2022 |
| | | | | US | 2022224420 | A1 | 14 July 2022 |
| | | | | US | 2022077961 | A1 | 10 March 2022 |
| | | | | US | 2021399808 | A1 | 23 December 2021 |
| | | | | US | 2022077926 | A1 | 10 March 2022 |
| | | | | US | 2022069974 | A1 | 03 March 2022 |
| | | | | US | 2022077931 | A1 | 10 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210504319